(19) Europäisches Patentamt
European Patent Office
Office européen des brevets

(11) EP 4 067 071 A1

(12) **EUROPEAN PATENT APPLICATION**
published in accordance with Art. 153(4) EPC

(43) Date of publication:
**05.10.2022 Bulletin 2022/40**

(21) Application number: **20894152.6**

(22) Date of filing: **26.11.2020**

(51) International Patent Classification (IPC):
***B32B 17/10*** *(2006.01)* ***B32B 27/18*** *(2006.01)*
***C03C 27/12*** *(2006.01)* ***G03B 21/14*** *(2006.01)*
***G03B 21/62*** *(2014.01)* ***G02B 5/02*** *(2006.01)*
***H04N 5/74*** *(2006.01)* ***B32B 7/023*** *(2019.01)*

(52) Cooperative Patent Classification (CPC):
**B32B 7/023; B32B 17/00; B32B 17/10; B32B 27/18; G02B 5/02; G03B 21/14; G03B 21/62; H04N 5/74**

(86) International application number:
**PCT/JP2020/044127**

(87) International publication number:
**WO 2021/107061 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.11.2019 JP 2019215867**
**22.05.2020 US 202063029036 P**

(71) Applicant: **SEKISUI CHEMICAL CO., LTD.**
**Osaka-shi**
**Osaka**
**530-8565 (JP)**

(72) Inventors:
- **MASUYAMA, Yoshikazu**
  **Koka-shi, Shiga 528-8585 (JP)**
- **OOTA, Yuusuke**
  **Koka-shi, Shiga 528-8585 (JP)**
- **NAKAYAMA, Kazuhiko**
  **Koka-shi, Shiga 528-8585 (JP)**
- **TOMURA, Kazuhiro**
  **Winchester, Kentucky 40391 (US)**

(74) Representative: **Ter Meer Steinmeister & Partner Patentanwälte mbB**
**Nymphenburger Straße 4**
**80335 München (DE)**

(54) **INTERMEDIATE FILM FOR LAMINATED GLASS, LAMINATED GLASS, AND IMAGE DISPLAY SYSTEM**

(57) An interlayer film for laminated glass of the present invention is an interlayer film for laminated glass comprising two or more resin layers, and comprising a first resin layer comprising a resin and a light diffusion particle and having a thickness of 150 μm or less, in which a total light transmittance is less than 70%.

Fig. 3

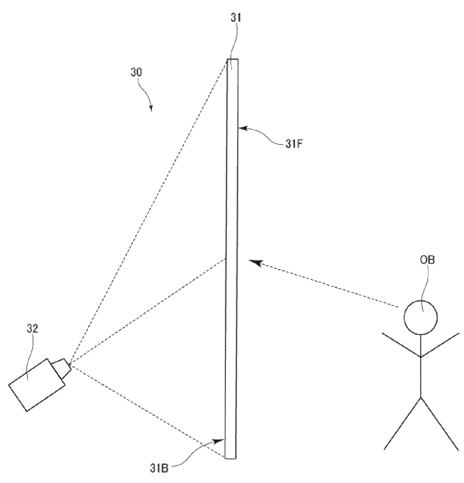


EP 4 067 071 A1

## Description

### Technical Field

The present invention relates to an interlayer film for laminated glass and a laminated glass which are suitably used in, for example, a screen display screen, and also relates to an image display system comprising laminated glass.

### Background Art

Laminated glass is widely used in window glass for various conveyances such as automobiles, railway vehicles, airplanes and marine vessels, and window glass for buildings and the like, because laminated glass is less prone to causing glass fragments to scatter even if it is subjected to an external impact and then broken, and is thus safe. Such laminated glass as is widely known is commonly one obtained by interposing an interlayer film for laminated glass configured from, for example, a thermoplastic resin, between paired sheets of glass, and then integrating the sheets of glass with the interlayer film.

An interlayer film for laminated glass is known which is made opaque white by compounding calcium carbonate and/or silica in order to allow for light penetration, but not to allow any person or object present behind the glass to be viewed for the purpose of enhancement in privacy protection performance (see, for example, PTL 1).

A technique for producing an image projected from a projector on a transparent screen is in practical use. Such a transparent screen commonly used is a transparent film comprising, for example, a light diffusion layer comprising a light diffusible fine particle (see, for example, PTLs 2 and 3).

In recent years, there has been increased a need for projection and display of advertising and the like on, for example, window glass for vehicles such as automobiles, and window glass for buildings such as partitions and show windows, and laminated glass has been tried to be used for transparent screens. For example, PTLs 4 to 6 each disclose a laminate such as laminated glass, in which an interlayer film is placed between two transparent base materials such as glass plates and the interlayer film comprises a light diffusible fine particle.

### Citation List

### Patent Literature

PTL 1: WO 2016/082800
PTL 2: WO 2016/104055
PTL 3: WO 2018/012433
PTL 4: WO 2016/143566
PTL 5: JP 2007-57906 A
PTL 6: WO 2019/111825

### Summary of Invention

### Technical Problem

However, a laminated glass comprising a conventional interlayer film for laminated glass has the problem of being incapable of imparting a sufficiently high contrast in image display even by compounding of a light diffusible fine particle in the interlayer film as described above.

An object of the present invention is to provide an interlayer film for laminated glass and a laminated glass, in which image display at a high contrast can be realized even in use of the laminated glass in an image display screen.

### Solution to Problem

The present inventors have made intensive studies, and as a result, have found that the above problems can be solved by the following configuration, leading to completion of the present invention. The gist of the present invention is as follows.

[1] An interlayer film for laminated glass, comprising:

two or more resin layers, wherein
the resin layers comprise a first resin layer comprising a resin and a light diffusion particle and having a thickness of 150 μm or less, and
a total light transmittance according to JIS R3106 (2019), of laminated glass in which the interlayer film is sandwiched between two sheets of clear glass according to JIS R3202 (2011), is less than 70%.

[2] An interlayer film for laminated glass for use in an image display screen, comprising:

two or more resin layers, wherein
the resin layers comprise a first resin layer comprising a resin and a light diffusion particle, and
a total light transmittance according to JIS R3106 (2019), of laminated glass in which interlayer film is sandwiched between two sheets of clear glass according to JIS R3202 (2011), is less than 70%.

[3] The interlayer film for laminated glass according to [2], wherein the first resin layer has a thickness of 150 μm or less.
[4] The interlayer film for laminated glass according to any one of [1] to [3], wherein a relationship according to the following expression (1):

$$500 \leq C \times T \leq 3600 \quad (1)$$

is satisfied, wherein a concentration of the light diffusion particle in the first resin layer is C (% by mass) and a thickness of the first resin layer is T (μm).
[5] The interlayer film for laminated glass according to any one of [1] to [4], wherein a concentration of the light diffusion particle in the first resin layer is 5% by mass or more.
[6] The interlayer film for laminated glass according to any one of [1] to [5], wherein the light diffusion particle comprises calcium carbonate.
[7] The interlayer film for laminated glass according to any one of [1] to [6], comprising:

a resin layer other than the first resin layer, wherein
the resin layer other than the first resin layer is provided on one surface side, the one surface being a surface through which light from a light source apparatus is incident.

[8] The interlayer film for laminated glass according to any one of [1] to [7], comprising:

second and third resin layers each comprising a resin, wherein
the first resin layer is placed between the second and third resin layers.

[9] The interlayer film for laminated glass according to any one of [1] to [8], for use in a rear-projection image display screen.
[10] A laminated glass, comprising:

paired glass members and an interlayer film for laminated glass, wherein the interlayer film for laminated glass is placed between the paired glass members,
the interlayer film for laminated glass comprises two or more resin layers,
the resin layers comprise a first resin layer comprising a resin and a light diffusion particle and having a thickness of 150 μm or less, and
a total light transmittance according to JIS R3106 (2019) is less than 70%.

[11] A laminated glass for use in an image display screen, comprising:

paired glass members and an interlayer film for laminated glass, wherein the interlayer film for laminated glass is placed between the paired glass members,
the interlayer film for laminated glass comprises two or more resin layers,
the resin layers comprise a first resin layer comprising a resin and a light diffusion particle, and
a total light transmittance according to JIS R3106 (2019) is less than 70%.

[12] An image display system comprising the laminated glass according to [10] or [11], and a light source apparatus for light irradiation on one surface of the laminated glass.

## Advantageous Effects of Invention

According to the present invention, there can be provided an interlayer film for laminated glass, and laminated glass, in which image display can be realized at a high contrast.

## Brief Description of Drawings

[Fig. 1] A schematic cross-sectional view illustrating one embodiment of the interlayer film for laminated glass and the laminated glass of the present invention.
[Fig. 2] A schematic cross-sectional view illustrating one embodiment of the interlayer film for laminated glass and the laminated glass of the present invention.
[Fig. 3] A schematic view illustrating an image display system according to one embodiment of the present invention.
[Fig. 4] A schematic view illustrating an image display system according to a first embodiment in another aspect.
[Fig. 5] A perspective view illustrating the appearance of an automobile to which an image display system according to a first embodiment in another aspect is applied.
[Fig. 6] A schematic view illustrating an image display system according to a second embodiment in another aspect, and illustrating a cargo space portion of an automobile.
[Fig. 7] A perspective view illustrating the appearance of an automobile to which an image display system according to a second embodiment in another aspect is applied.
[Fig. 8] A schematic view illustrating an image display system according to a third embodiment in another aspect, and illustrating the internal portion of a cab of a pickup truck.
[Fig. 9] A rear view illustrating the appearance of an automobile to which an image display system according to a third embodiment in another aspect is applied.
[Fig. 10] A schematic view illustrating an image display system according to a fourth embodiment in another aspect.
[Fig. 11] A front view illustrating the appearance of an automobile to which an image display system according to a fourth embodiment in another aspect is applied.
[Fig. 12] A schematic view illustrating an image display system according to a fifth embodiment in another aspect.
[Fig. 13] A schematic view illustrating the appearance of an automobile to which an image display system according to a fifth embodiment in another aspect is applied, and illustrating a rear surface of an automobile observed from the vehicle interior of another automobile.
[Fig. 14] A schematic view illustrating an image display system according to a sixth embodiment in another aspect.
[Fig. 15] A side view illustrating the appearance of an automobile to which an image display system according to a sixth embodiment in another aspect is applied.
[Fig. 16] A schematic view illustrating specific examples of a message and an icon for use in an image display system according to a sixth embodiment in another aspect.
[Fig. 17] A view illustrating the appearance of display glass to which an image display system according to a sixth embodiment in another aspect is applied.
[Fig. 18] A schematic view illustrating an image display system according to a seventh embodiment in another aspect.
[Fig. 19] A perspective view of the appearance of one example of an automobile to which an image display system according to a seventh embodiment in another aspect is applied, from an anterior view.
[Fig. 20] A perspective view of the appearance of one example of an automobile to which an image display system according to a seventh embodiment in another aspect is applied, from a lateral view.
[Fig. 21] A schematic view illustrating an image display system according to an eighth embodiment in another aspect.
[Fig. 22] A schematic view illustrating the vehicle interior of an automobile to which an image display system according to an eighth embodiment in another aspect is applied.
[Fig. 23] A schematic cross-sectional view illustrating one example of laminated glass for use in an image display system according to another aspect.
[Fig. 24] A schematic cross-sectional view illustrating another example of laminated glass for use in an image display system according to another aspect.

## Description of Embodiments

Hereinafter, the present invention is described in detail with reference to embodiments.

<Interlayer film for laminated glass>

The interlayer film for laminated glass (hereinafter, also simply referred to as "interlayer film") of the present invention comprises two or more resin layers, and comprises a first resin layer comprising a resin and a light diffusion particle.

The interlayer film, which is multi-layered and comprises the first resin layer comprising a light diffusion particle, thus can allow image display at a high contrast to be realized and allow an image to be clearly displayed when used in an image display screen. Although the principle is not clear, it is presumed that image display at a high contrast can be made due to not only appropriate light propagation in a resin layer other than the first resin layer, but also light-scattering concentrically occurring in a restricted region (first resin layer) by the light diffusion particle. The interlayer film, which comprises a resin layer other than the first resin layer, thus can adhere to a glass member constituting laminated glass with such a resin layer other than the first resin layer being interposed, and therefore the interlayer film is easily enhanced in adhesiveness thereof to the glass member.

(Total light transmittance)

The total light transmittance (TvD) of a laminated glass produced by using the interlayer film of the present invention and standard glass is less than 70%. When the total light transmittance is 70% or more, light-scattering in the interlayer film does not sufficiently occur and image display at a high contrast is difficult. When the total light transmittance is less than 70%, an object which is placed at an opposite side with the interlayer film being interposed and which is for use in image display, such as a light source apparatus, is hardly viewed and furthermore privacy protection performance can also be enhanced. The total light transmittance (TvD) of laminated glass produced by the interlayer film of the present invention and standard glass is preferably 68% or less, more preferably 66% or less from the viewpoint that image display is made at a higher contrast and from the viewpoint that not only an object at a rear side is hardly viewed, but also privacy protection performance is further enhanced. The total light transmittance (TvD) is not particularly limited, and is, for example, 10% or more, preferably 20% or more, more preferably 35% or more, further preferably 50% or more. When the total light transmittance (TvD) is equal to or more than the lower limit value, brightness of laminated glass obtained is enhanced and image display at a high contrast is facilitated.

In the present invention, the total light transmittance (TvD) is the value measured according to JIS R3106 (2019). Specifically, in the present invention, the value obtained by sandwiching the interlayer film between two sheets of clear glass according to JIS R3202 (2011) (namely, two sheets of standard glass) to thereby produce laminated glass, and measuring the total light transmittance (TvD) of the laminated glass is defined as the total light transmittance (TvD) of laminated glass produced by using the interlayer film and standard glass. The standard glass here used is clear glass having a thickness of 2.5 mm. The clear glass here used may be one having a visible light transmittance of 90.4%.

The total light transmittance is here commonly an index different from the visible light transmittance. The visible light transmittance is measured with parallel beam without any consideration of reflected light and scattered light. On the other hand, the total light transmittance is an index obtained in consideration of reflected light and scattered light, and both reflected light and scattered light are subjected to measurement as indicated in a measurement method described below.

In a case where the first resin layer is provided on a partial region of the interlayer film as described below, the above total light transmittance (TvD) and the total light transmittance (TvD) of laminated glass described below are each the total light transmittance (TvD) of a region where the first resin layer which has a thickness in a range described below is provided. The total light transmittance may differ with respect to each position due to, for example, placement of a region where the thickness of the first resin layer is gradually changed as described below. In such a case, the total light transmittance of at least a partial region may be in the range, and that of a region exhibiting the lowest total light transmittance is preferably in the numerical value range. For example, when a region where the thickness of the first resin layer is constant is present, the total light transmittance of such a region is preferably in the range.

The haze of laminated glass produced by using the interlayer film of the present invention and standard glass is preferably 35% or more. The haze is more preferably 45% or more, further preferably 55% or more, particularly preferably 65% or more. Such laminated glass produced by using standard glass, which has a haze in the range, thus allows image display at a high contrast to be facilitated when the interlayer film of the present invention is used in an image display screen.

In a case where the first resin layer is provided on a partial region of the interlayer film as described below, the above haze and the haze of laminated glass described below are each the haze of a region where the first resin layer, which has a thickness in a range described below, is provided. The haze may differ with respect to each position due to, for example, placement of a region where the thickness of the first resin layer is gradually changed as described below. In such a case, the haze of at least a partial region may be in the range, and that of a region exhibiting the lowest haze is preferably in the numerical value range. For example, when a region where the thickness of the first resin layer

is constant is present, the haze of such a region is preferably in the range.

The haze can be here measured according to JIS K6714.

[First resin layer]

In one embodiment of the present invention, the thickness of the first resin layer comprising a light diffusion particle is 150 μm or less. The first resin layer, which has a thickness of 150 μm or less, hardly causes light incident on the interlayer film to be multiply scattered in the thickness direction, and allows image display at a high contrast to be facilitated in use in an image display screen. The thickness of the first resin layer is preferably 120 μm or less, more preferably 100 μm or less, further preferably 90 μm or less from the viewpoint that image display at a high contrast is easily realized.

The thickness of the first resin layer is preferably 20 μm or more, more preferably 40 μm or more, further preferably 70 μm or more from the viewpoint that light-scattering in a certain amount or more is easily allowed to occur in the interlayer film.

The thickness of the first resin layer may be constant in the interlayer film, and may also be changed as described below. In a case where the thickness is changed, the thickness of the first resin layer in a partial region of the interlayer film for laminated glass may be in the range.

In a case where the thickness of the first resin layer is changed and laminated glass is used in an image display screen, the thickness of the first resin layer may mean the thickness in an image display region. In other words, the first resin layer is present in the image display region and the thickness of the first resin layer is 150 μm or less, whereas a suitable range is as described above. The image display region is the region which is to be irradiated with light from a light source apparatus to allow an image to be displayed on laminated glass. The image display region which comprises the first resin layer and has a thickness of 150 μm or less may have a total light transmittance in the range and also a haze in a suitable range as described above.

Herein, in order that the contrast of an image is high in a certain region or more, for example, the first resin layer may be present and the thickness of the first resin layer may be in the range, in a region corresponding to 15% or more and 100% or less, preferably 30% or more and 100% or less, more preferably 50% or more and 100% or less of the entire region of the interlayer film.

When a region where the thickness of the first resin layer is constant is present, a region where the first resin layer is present and has a thickness which is in the range and is such a constant thickness may be present from the viewpoint of stabilization of the contrast. The region where the first resin layer is present and has a thickness which is in the range and is such a constant thickness may correspond to an image display region.

The method for measuring the thickness of the first resin layer of the interlayer film is as described below.

In other words, the interlayer film is cut by a sharp leather blade so that respective cross sections of the first resin layer and other resin layer are exposed. Thereafter, the cross sections exposed of the interlayer film are observed with a digital microscope ("DSX500" manufactured by Olympus Corporation), to measure the thicknesses of the interlayer film and each of the layers with a microgauge.

(Light diffusion particle)

The light diffusion particle for use in the present invention is not particularly limited as long as it is a compound which can scatter light incident into the interlayer film, and specific examples thereof include inorganic substances such as calcium carbonate, silica, titanium oxide, glass flake, mica, alumina and aluminum. Such compounds may be used singly or in combinations of two or more thereof. The shape of the light diffusion particle may be any shape, and may be any of a spherical shape, a broken shape, an amorphous shape, a multangular shape and a flat plate shape.

In particular, calcium carbonate, silica or titanium oxide is preferable, and calcium carbonate is more preferable, from the viewpoint of, for example, light-scattering ability.

The median size of the light diffusion particle is, for example, 0.1 μm or more and 50 μm or less, preferably 0.5 μm or more and 50 μm or less. When the median size is in such a range, light incident into the interlayer film is easily anisotropically scattered and therefore an image displayed is easily high in contrast. The median size of the light diffusion particle is more preferably 1 μm or more, further preferably 1.5 μm or more, from such a viewpoint, and is still further preferably 3 μm or more in the case of calcium carbonate. The median size is more preferably 30 μm or less, further preferably 15 μm or less.

The median size means intermediate diameter, and means the particle size (= D50) at which the accumulation of frequency (namely, number of particles) reaches 50%. The median size can be measured, specifically, with a light-scattering measurement apparatus according to a dynamic light-scattering method with an Ar laser as a light source. Examples of the light-scattering measurement apparatus include "DLS-6000AL" manufactured by Otsuka Electronics Co., Ltd.

The concentration of the light diffusion particle in the first resin layer is preferably 5% by mass or more. When the concentration of the light diffusion particle is 5% by mass or more, sufficient light-scattering ability is obtained and the contrast of an image displayed in use of the interlayer film in an image display screen is easily increased. Moreover, an object placed at a rear side with the interlayer film being interposed, such as a light source apparatus, is hardly viewed, and furthermore, for example, privacy protection performance is also easily enhanced. The concentration of the light diffusion particle in the first resin layer is more preferably 7% by mass or more, further preferably 10% by mass or more, particularly preferably 12% by mass or more, most preferably 15% by mass or more, from the above viewpoints.

The concentration of the light diffusion particle in the first resin layer is, for example, 75% by mass or less, preferably 50% by mass or less, more preferably 34% by mass or less, further preferably 30% by mass or less, still further preferably 24% by mass or less. When the content is equal to or less than the upper limit value, light from a light source apparatus used for image display is prevented from being excessively shielded in the first resin layer and an image displayed is easily high in brightness and high in contrast. The light is also prevented from being excessively shielded by the light diffusion particle, and appropriate use in, for example, window glass can be made.

The concentration of the light diffusion particle in the first resin layer can be herein measured by, for example, the following method. First, the interlayer film is cut to a proper size, and thereafter a resin layer other than the first resin layer is peeled, to obtain 1 g of a sample of only the first resin layer. To 1 g of the sample obtained, 18 mL of an aqueous nitric acid solution (concentration 70% by mass) is added, and the resultant solution is kept at 200°C for 30 minutes to be subjected to heating and decomposition by use of a microwave sample pretreatment apparatus ("ETHOS One" manufactured by Milestone General K.K.), and thereafter prepared to a fixed volume with ultrapure water having a specific resistance of 18.2 MΩcm under a condition of 25°C, to thereby obtain a test liquid. Next, a metal element or silicon constituting the light diffusion particle in the test liquid is quantitatively analyzed with a high frequency inductive coupling plasma emission analyzer ("ICPE-9000" manufactured by Shimadzu Corporation). For example, in a case where the light diffusion particle is calcium carbonate, the content of calcium carbonate is calculated under the assumption that all calcium comprised corresponds to calcium carbonate.

A relationship according to the following expression (1):

$$500 \leq C \times T \leq 3600 \quad (1)$$

is preferably satisfied, wherein the concentration of the light diffusion particle in the first resin layer is C (% by mass) and the thickness of the first resin layer is T (μm).

When the above relational expression is satisfied, the contrast of an image displayed in the case of use of the interlayer film in an image display screen can be more certainly increased. Moreover, an object placed at a rear side with the interlayer film being interposed, such as a light source apparatus, is hardly viewed, and furthermore, for example, privacy protection performance is also easily enhanced. Furthermore, certain light easily penetrates and a suitable application to window glass can be made. The interlayer film of the present invention more preferably satisfies a relationship according to the following expression (2), further preferably satisfies a relationship according to the following expression (3), particularly preferably satisfies a relationship according to the following expression (4), and most preferably satisfies a relationship according to the following expression (5), from the above viewpoints.

$$1000 \leq C \times T \leq 3200 (2)$$

$$1450 \leq C \times T \leq 3200 (3)$$

$$1500 \leq C \times T \leq 3200 (4)$$

$$1550 \leq C \times T \leq 2500 (5)$$

In a case where the first resin layer is provided on a partial region of the interlayer film or the thickness thereof is changed, such a partial region of the interlayer film for laminated glass may satisfy at least any of the expressions (1) to (5), preferably 15% or more and 100% or less, more preferably 30% or more and 100% or less, further preferably 50% or more and 100% or less of the entire region of the interlayer film may satisfy at least any of expressions (1) to (5) (preferably the expression (1), more preferably expression (2), further preferably expression (3), particularly preferably expression (4), and most preferably expression (5)). When a region where the thickness of the first resin layer is constant

is present, a region satisfying at least any of expressions (1) to (5) may be a region where the thickness of the first resin layer is constant, from the viewpoint of stabilization of the contrast.

In a case where the thickness of the first resin layer is changed and the interlayer film is used in an image display screen, an image display region may preferably satisfy the expression (1), more preferably expression (2), further preferably expression (3), particularly preferably expression (4), most preferably expression (5).

The concentration of the light diffusion particle in the entire interlayer film is preferably 0.5% by mass or more. When the concentration of the light diffusion particle in the entire interlayer film is equal to or more than the lower limit value, the contrast of the image is easily much further increased. Moreover, an object placed at a rear side with the interlayer film being interposed, such as a light source apparatus, is hardly viewed, and furthermore, for example, privacy protection performance is also easily enhanced. The concentration of the light diffusion particle in the entire interlayer film is more preferably 1% by mass or more, further preferably 1.5% by mass or more, from the above viewpoints.

The concentration of the light diffusion particle in the entire interlayer film is preferably 7% by mass or less. When the concentration of the light diffusion particle in the entire interlayer film is equal to or less than the upper limit value, light from the light source apparatus is prevented from being excessively shielded in the interlayer film and an image displayed is easily high in brightness and high in contrast. The interlayer film can also be appropriately used in, for example, window glass. The concentration of the light diffusion particle in the entire interlayer film is more preferably 5% by mass or less, further preferably 4% by mass or less, from the above viewpoints.

The first resin layer comprises a resin as described above, and the light diffusion particle is dispersed in the resin in the first resin layer. The resin for use in the first resin layer is preferably a thermoplastic resin. A thermoplastic resin is used in the first resin layer, and thus the first resin layer is allowed to easily adhere to other resin layer, a glass member, and the like. In the following description, the thermoplastic resin for use in the first resin layer may be described as a thermoplastic resin (1).

The thermoplastic resin (1) for use in the first resin layer is not particularly limited, and examples thereof include a polyvinyl acetal resin, an ethylene-vinyl acetate copolymer resin, an ionomer resin, a polyurethane resin and a thermoplastic elastomer. Such a resin is used, and thus adhesiveness of the first resin layer to other resin layer, a glass member, and the like is easily ensured. In particular, the thermoplastic resin (1) is preferably a polyvinyl acetal resin. A polyvinyl acetal resin is used, and thus adhesiveness to a glass member, in particular, adhesiveness in the case of inorganic glass as the glass member is easily improved. In addition, characteristics necessary for laminated glass, such as penetration resistance and noise barrier performance, are easily obtained.

The thermoplastic resin for use as the thermoplastic resin (1) in the first resin layer may be adopted singly or in combinations of two or more thereof. The detail of the thermoplastic resin for use in the first resin layer is described below.

The first resin layer in the present invention preferably further comprises a plasticizer. The plasticizer comprised in the first resin layer may be referred to as "plasticizer (1)". The first resin layer comprises the plasticizer (1), and thus is flexible, and as a result, allows laminated glass to be enhanced in flexibility and easily enhanced in penetration resistance and noise barrier performance. By comprising the light diffusion particle and the plasticizer, the contrast of an image displayed, in use of the interlayer film in an image display screen, can be much further increased. Such an increase is due to an increase in difference in refractive index between the first resin layer and the light diffusion particle by inclusion of the plasticizer. The light diffusion particle is dispersed in the plasticizer and then compounded in the thermoplastic resin, and thus the light diffusion particle can be uniformly dispersed to thereby suppress image unevenness in projection of a screen image.

Furthermore, adhesiveness to, for example, a glass member forming laminated glass, or other resin layer forming the interlayer film can be enhanced. The plasticizer (1) is particularly effective when comprised in the case of use of a polyvinyl acetal resin (1) as the thermoplastic resin (1). The detail of the plasticizer (1) is described below.

The content (hereinafter, sometimes designated as "content (1)") of the plasticizer (1) in the first resin layer based on 100 parts by mass of the thermoplastic resin (1) is, for example, 20 parts by mass or more, preferably 30 parts by mass or more, more preferably 40 parts by mass or more. When the content (1) is each equal to or more than the lower limit, the interlayer film is enhanced in flexibility and the interlayer film is easily handled. The content (1) is preferably higher from the viewpoint of noise barrier performance, and the content (1) is further preferably 55 parts by mass or more, still further preferably 60 parts by mass or more from such a viewpoint. The content is preferably equal to or more than the lower limit also from the viewpoint of enhancement in contrast of an image displayed on a screen.

The content (1) of the plasticizer (1) is preferably 100 parts by mass or less, more preferably 90 parts by mass or less, further preferably 85 parts by mass or less, particularly preferably 80 parts by mass or less. When the content (1) is equal to or less than the upper limit, laminated glass is much more enhanced in penetration resistance.

While the total content of the thermoplastic resin and the plasticizer in the first resin layer is, for example, 25% by mass or more, the thermoplastic resin, or the thermoplastic resin and the plasticizer preferably serve(s) as main component(s). Specifically, the total amount of the thermoplastic resin and the plasticizer is preferably 50% by mass or more, more preferably 60% by mass or more, further preferably 65% by mass or more and less than 100% by mass, based on the total amount of the first resin layer.

[Layer configuration]

The interlayer film of the present invention has a laminated structure of two or more layers, and may be an interlayer film 10 having a second resin layer 12 in addition to the first resin layer 11, as illustrated in Fig. 1. The second resin layer 12 is provided on one surface of the first resin layer 11. In the interlayer film 10, a surface of the second resin layer 12, located opposite to the first resin layer 11 side, and a surface of the first resin layer 11, located opposite to the second resin layer 12 side, may serve as adhesion surfaces for adhesion to glass members 21 and 22 for constituting laminated glass 20.

The interlayer film is preferably an interlayer film 15 having a third resin layer 13 in addition to the first resin layer 11 and the second resin layer 12, as illustrated in Fig. 2. The third resin layer 13 is provided on a surface (other surface) of the first resin layer 11, located opposite to the one surface on which the second resin layer 12 is provided. In other words, the first resin layer 11 is preferably placed between the second resin layer 12 and the third resin layer 13. Such other resin layers 12 and 13 are thus respectively provided on both surfaces of the first resin layer 11, and thus adhesiveness of the interlayer film to the glass members 21 and 22 is improved even if a large amount of the light diffusion particle is comprised in the first resin layer 11. A resin layer in which a large amount of the light diffusion particle is compounded is not placed as the outermost layer, and thus a forming apparatus such as an extruder can be prevented from being contaminated due to the light diffusion particle in formation of the interlayer film.

In the interlayer film 15, a surface of the second resin layer 12, located opposite to the first resin layer 11 side, and a surface of the third resin layer 13, located opposite to the first resin layer 11 side, may serve as adhesion surfaces for adhesion to glass members 21 and 22 for forming laminated glass 25.

The interlayer film may here comprise a layer other than the above first to third resin layers, and, for example, any other layer such as a barrier layer, an adhesion layer or a resin layer may be placed between the second resin layer 12 and the first resin layer 11 and between the first resin layer 11 and the third resin layer 13. It is noted that the second resin layer 12 and the first resin layer 11 are preferably directly laminated and the first resin layer 11 and the third resin layer 13 are preferably directly laminated.

The second resin layer 12, or the second and third resin layers 12 and 13 in each of the interlayer films 10 and 15 preferably constitute(s) adhesion surfaces for adhesion to the glass members 21 and 22, as described above, and the resin layers 12 and 13 may adhere to the glass members 21 and 22 with any other layer such as an adhesion layer being interposed. The first resin layer 11 in the interlayer film 10 illustrated in Fig. 1 may serve as an adhesion surface for adhesion to the glass member 22 as described above, or may adhere to the glass member 22 with an adhesion layer and/or the like being interposed.

In a case where the interlayer film is used in an image display screen, light from a light source apparatus such as a projector is incident through one surface. Herein, a resin layer (second resin layer or third resin layer) other than the first resin layer is preferably provided on one surface side as compared with the first resin layer, the one surface being a surface through which light from the light source apparatus is incident. Such a configuration allows light emitted from the light source apparatus to be incident on the first resin layer via a resin layer other than the first resin layer, thereby allowing image display at a higher contrast to be facilitated.

Accordingly, such light emitted from the light source apparatus is preferably incident from the second resin layer 12 side (namely, glass member 21 side) in the interlayer film 10 illustrated in Fig. 1. The image display screen is preferably rear-projection one as described below, and thus it is preferable that the light from the light source apparatus be incident from the second resin layer 12 side and an image formed by the light from the light source apparatus be observed from the first resin layer 11 side (namely, glass member 22 side).

On the other hand, it is preferable in the interlayer film 15 illustrated in Fig. 2 that the light from the light source apparatus be incident from one resin layer side of the second and third resin layers 12 and 13 and be observed from other resin layer side thereof.

The first resin layer comprising a light diffusion particle may be formed on the entire surface of the interlayer film for laminated glass, or may be formed on a partial region thereof. For example, in a case where the interlayer film 15 comprises the first to third resin layers 11, 12 and 13 as in Fig. 2, the first resin layer 11 may be provided on a partial region of the interlayer film for laminated glass and no first resin layer 11 may be provided on other regions. In other words, a portion composed of two layers of the second and third resin layers 12 and 13 and a portion composed of three layers of the first to third resin layers 11, 12 and 13 may be provided in the interlayer film 15 in the configuration illustrated in Fig. 2. In a case where the first resin layer 11 is thus provided on a partial region of the interlayer film for laminated glass, a region where the first resin layer 11 is provided may be irradiated with light for image display.

The interlayer film may have one of a region where the thickness of the first resin layer is constant, and a region where the thickness is gradually changed (for example, a region where the thickness is gradually decreased from the region where the thickness is constant), may have only one thereof, or may have both the region where the thickness is constant and the region where the thickness is gradually changed. The interlayer film preferably has at least the region where the thickness is constant in order to stabilize the contrast of an image.

[Second and third resin layers]

The second resin layer is a layer comprising a resin, and the resin for use in the second resin layer is preferably a thermoplastic resin. Accordingly, in a case where the interlayer film comprises the first and second resin layers, both the respective resins forming the first and second resin layers are preferably thermoplastic resins. A thermoplastic resin is used in the second resin layer, and thus the second resin layer is allowed to easily adhere to other resin layer, a glass member, and the like. In the following description, the thermoplastic resin for use in the second resin layer may be referred to as "thermoplastic resin (2)".

The third resin layer is a layer comprising a resin, and the resin for use in the third resin layer is preferably a thermoplastic resin. Accordingly, in a case where the interlayer film comprises the first, second and third resin layers, all the respective resins forming the first, second and third resin layers are preferably thermoplastic resins. A thermoplastic resin is used in the third resin layer, and thus the third resin layer is allowed to easily adhere to other resin layer, a glass member, and the like. In the following description, the thermoplastic resin for use in the third resin layer may be referred to as "thermoplastic resin (3)".

The thermoplastic resins (2) and (3) for use in the second and third resin layers are not particularly limited, and, for example, the respective resins here used can be appropriately selected from those listed as resins each usable as the thermoplastic resin (1). In particular, a polyvinyl acetal resin is preferable. A polyvinyl acetal resin is used to thereby improve adhesiveness to a glass member, particularly, adhesiveness in the case of inorganic glass as the glass member. In addition, characteristics necessary for laminated glass, such as penetration resistance and noise barrier performance, are easily obtained.

The thermoplastic resin for use in each of the thermoplastic resins (2) and (3) may be used singly or in combinations of two or more thereof.

The type of the thermoplastic resin (2) is preferably the same as that of the thermoplastic resin (1). Accordingly, in a case where the thermoplastic resin (1) is a polyvinyl acetal resin, the thermoplastic resin (2) is also preferably a polyvinyl acetal resin. The type of the thermoplastic resin (3) is preferably the same as those of the thermoplastic resin (1) and the thermoplastic resin (2). Accordingly, in a case where the thermoplastic resin (1) is a polyvinyl acetal resin, both the thermoplastic resins (2) and (3) are preferably polyvinyl acetal resins. The details of the thermoplastic resins (2) and (3) for use in the second and third resin layers are described below.

The second resin layer in the interlayer film preferably comprises a plasticizer. The third resin layer preferably comprises a plasticizer. In other words, both the first and second resin layers preferably each comprise a plasticizer, and all the first, second and third resin layers further preferably each comprise a plasticizer, in the interlayer film. The respective plasticizers comprised in the second and third resin layers may be referred to as "plasticizer (2)" and "plasticizer (3)".

The second resin layer, or the second and third resin layers comprise(s) such plasticizer(s) and thus is/are flexible, and as a result, allow(s) laminated glass to be enhanced in flexibility and also enhanced in penetration resistance. Furthermore, high adhesiveness to a glass member such as glass plate or other resin layer in the interlayer film can also be exhibited. In a case where polyvinyl acetal resins (2) and (3) are respectively used as the thermoplastic resins also in the second and third resin layers, it is particularly effective to comprise a plasticizer as a thermoplastic resin. The types of the plasticizers (2) and (3) may be each the same as or different from that of the plasticizer (1). The types of plasticizers (2) and (3) may be the same as or different from each other. Each of the plasticizers for use as the plasticizer (2) and plasticizer (3) may be used singly or in combinations of two or more thereof.

The content (hereinafter, sometimes designated as "content (2)") of the plasticizer (2) in the second resin layer based on 100 parts by mass of the thermoplastic resin (2), and the content (hereinafter, sometimes designated as "content (3)") of the plasticizer (3) in the third resin layer based on 100 parts by mass of the thermoplastic resin (3) are preferably each 10 parts by mass or more. The content (2) and the content (3) are each equal to or more than the lower limit, and thus the interlayer film is enhanced in flexibility and the interlayer film is easily handled. The content (2) and the content (3) are each more preferably 15 parts by mass or more, further preferably 20 parts by mass or more, particularly preferably 24 parts by mass or more, from the above viewpoints.

The content (2) and the content (3) are each preferably 60 parts by mass or less, more preferably 50 parts by mass or less, further preferably 40 parts by mass or less. The content (2) and the content (3) are each equal to or less than the upper limit, and thus the interlayer film is improved in mechanical characteristics such as flexural rigidity.

The content (1) of the plasticizer in the first resin layer is preferably higher than the content (2), preferably higher than the content (3), further preferably higher than both the contents (2) and (3), in order to enhance noise barrier performance of laminated glass.

The absolute value of the difference between the content (2) and the content (1) and the absolute value of the difference between the content (3) and the content (1) are each preferably 10 parts by mass or more, more preferably 15 parts by mass or more, further preferably 25 parts by mass or more, from the viewpoint of a much more enhancement in noise barrier performance of laminated glass. The absolute value of the difference between the content (2) and the

content (1) and the absolute value of the difference between the content (3) and the content (1) are each preferably 80 parts by mass or less, more preferably 70 parts by mass or less, further preferably 60 parts by mass or less.

The second and third resin layers each mainly comprise the thermoplastic resin, or the thermoplastic resin and the plasticizer, and the total amount of the thermoplastic resin and the plasticizer is preferably 70% by mass or more, more preferably 80% by mass or more, further preferably 90% by mass or more and 100% by mass or less based on the total amount of the second resin layer or the third resin layer.

The second resin layer may or may not comprise the light diffusion particle. The third resin layer may or may not comprise the light diffusion particle. Herein, the concentration of the light diffusion particle in the entire interlayer film may be designed so as to be in the above range. Accordingly, the second resin layer, even if comprising the light diffusion particle, is preferably low in content of the light diffusion particle, or preferably comprises no light diffusion particle, and more preferably comprises no light diffusion particle. Similarly, the third resin layer, even if comprising the light diffusion particle, is also preferably low in content of the light diffusion particle, or preferably comprises no light diffusion particle, and more preferably comprises no light diffusion particle.

The second resin layer, or the second and third resin layers comprise(s) no light diffusion particle, or even if comprising the light diffusion particle, comprise(s) a small amount of the light diffusion particle, and thus almost no light-scattering is caused in the second resin layer, or the second and third resin layers. Thus, an image displayed can be increased in contrast in use of the interlayer film in an image display screen.

A specific concentration of the light diffusion particle in the second resin layer is not particularly limited, and is, for example, 1% by mass or less, preferably 0.5% by mass or less, more preferably 0.1% by mass or less, further preferably 0% by mass.

A specific concentration of the light diffusion particle in the third resin layer is not particularly limited, and is, for example, 1% by mass or less, preferably 0.5% by mass or less, more preferably 0.1% by mass or less, further preferably 0% by mass.

The second resin layer may comprise a colorant, or may comprise substantially no colorant. Similarly, the third resin layer may comprise a colorant, or may comprise substantially no colorant.

Similarly, the first resin layer may comprise a colorant, or may comprise substantially no colorant. In a case where the first resin layer comprises a colorant and the first resin layer is partially provided as described above, not only light is shielded, but also image display can be made, in a region where the first resin layer is provided. A region where no first resin layer is provided is increased in total light transmittance and can ensure high viewability. Thus, application to, for example, a front glass of an automobile can also be made.

Here, such comprising substantially no colorant in each of the resin layers means that no colorant is purposely comprised in such layers, and the concentration of the colorant in such resin layers is, for example, less than 0.005% by mass, preferably less than 0.001% by mass, more preferably 0% by mass.

The colorant encompasses any color matter of, for example, blue, yellow, red, green, purple, black and white, and such any color matter encompasses both a pigment and a dye.

Examples of the pigment include copper phthalocyanine pigments such as Pigment Blue, phthalocyanine-based pigments such as a cobalt phthalocyanine pigment, anthraquinone-based pigments, perylene pigments, diketopyrrolopyrrole-based pigments, quinacridone-based pigments, perinone-based pigments, thioindigo-based pigments, isoindoline-based pigments, isoindolinone-based pigments, quinophthalone-based pigments, threne-based pigments, titanium oxide-based pigments, carbonaceous materials such as carbon black including Pigment Black 7 or the like, graphene and carbon nanotube.

Examples of the dye include an azo dye, a cyanine dye, a triphenylmethane dye, a phthalocyanine dye, an anthraquinone dye, a naphthoquinone dye, a quinoneimine dye, a methine dye, an azomethine dye, a squarylium dye, an acridine dye, a styryl dye, a coumarin dye, a quinolone dye and a nitro dye. The dye may also be a dispersive dye.

The first, second and third resin layers may, if necessary, each appropriately comprise additive(s) other than the light diffusion particle, the plasticizer and the colorant, such as an infrared absorber, an ultraviolet absorber, an antioxidant, a light stabilizer, a fluorescent whitener, a crystal nucleator, a dispersant, a carboxylic acid metal salt and/or a heat shield material.

(Thickness of interlayer film)

The thickness of the interlayer film (namely, the thickness of the entire interlayer film) is not particularly limited, and is preferably 100 μm or more and 3.0 mm or less. When the thickness of the interlayer film is 100 μm or more, for example, adhesiveness of the interlayer film and penetration resistance of laminated glass can be improved. When the thickness is 3.0 mm or less, the thickness of the interlayer film is prevented from being excessively large and transparency is also easily ensured. The thickness of the interlayer film is more preferably 200 μm or more, further preferably 400 μm or more. The thickness is more preferably 2.0 mm or less, further preferably 1.5 mm or less.

(Thicknesses of second and third resin layers)

The thickness of the second resin layer, or the respective thicknesses of the second and third resin layers is/are not particularly limited, and is/are preferably 50 μm or more and 1.3 mm or less. When these thicknesses are each 50 μm or more, the contrast in image display is easily increased and furthermore, for example, adhesiveness of the interlayer film and penetration resistance of laminated glass can be improved. When these thicknesses are each 1.3 mm or less, the thickness of the interlayer film is prevented from being excessively large and transparency is also easily ensured. The thickness of the second resin layer, or the respective thicknesses of the second and third resin layers is/are more preferably 100 μm or more, further preferably 150 μm or more, and more preferably 1 mm or less, further preferably 500 μm or less, from the above viewpoints. The respective thicknesses of the second and third resin layers may be constant or changed over the entire interlayer film, and both the thicknesses may be in the above range when changed.
The thickness of the second resin layer, or the respective thicknesses of the second and third resin layers is/are preferably more than the thickness of the first resin layer. These resin layers are increased in thickness, and thus the contrast in image display is easily increased and adhesiveness of the interlayer film to a glass member is also easily enhanced. Each rate of the thickness of the second resin layer, or the respective thicknesses of the second and third resin layers, relative to the thickness of the first resin layer, is preferably 1.2 or more, more preferably 1.4 or more, further preferably 2 or more, and preferably 10 or less, more preferably 8 or less, further preferably 5 or less, from the above viewpoints.
While the respective thicknesses of the first, second and third resin layers may be changed, the above rate of the thicknesses may be in the range in any region, or may be more preferably in the range in a region where the thickness of the first resin layer is in the range (namely, 150 μm or less, preferably 20 μm or more and 120 μm or less, more preferably 40 μm or more and 100 μm or less, further preferably 70 μm or more and 90 μm or less). The region may serve as an image display region.

(Polyvinyl acetal resin)

Hereinafter, the details of the respective polyvinyl acetal resins for use in the first, second and third resin layers are described. In the following description, the configuration common to the respective polyvinyl acetal resins for use in the first, second and third resin layers is described simply in terms of "polyvinyl acetal resin". Respective individual configurations of the polyvinyl acetal resins for use in the first, second and third resin layers are described in terms of "polyvinyl acetal resin (1)", "polyvinyl acetal resin (2)" and "polyvinyl acetal resin (3)".
The polyvinyl acetal resin is obtained by acetalization of polyvinyl alcohol (PVA) with aldehyde. In other words, the polyvinyl acetal resin is preferably an acetalized product of polyvinyl alcohol (PVA). Polyvinyl alcohol (PVA) is obtained by saponification of, for example, polyvinyl ester such as polyvinyl acetate. The degree of saponification of polyvinyl alcohol is generally 70 to 99.9% by mol. The polyvinyl acetal resin may be used singly or in combinations of two or more thereof. Herein, respective PVAs for obtaining the polyvinyl acetal resins (1), (2) and (3) may be described as PVAs (1),(2) and (3) in the following description.
The average degree of polymerization of PVA is preferably 200 or more, more preferably 500 or more, further preferably 1000 or more, still further preferably 1500 or more. When the average degree of polymerization is equal to or more than the lower limit, penetration resistance of laminated glass is enhanced. The average degree of polymerization of PVA is preferably 5000 or less, more preferably 4000 or less, further preferably 3500 or less, still further preferably 2500 or less. When the average degree of polymerization is equal to or less than the upper limit, the interlayer film is easily formed.
In a case where the content of the plasticizer is increased, the average degree of polymerization of PVA is preferably increased. Accordingly, in a case where the content (1) of the plasticizer in the first resin layer is, for example, 55 parts by mass or more, the average degree of polymerization of PVA (1) is suitably 2000 or more.
The average degree of polymerization of PVA (1) may be lower than, the same as, or higher than the average degree(s) of polymerization of PVA (2) or PVAs (2) and (3), and the average degree of polymerization of PVA (1) is preferably equal to or more than the average degree(s) of polymerization of PVA (2) or PVAs (2) and (3). Thus, in a case where the average degree of polymerization of PVA (1) is increased, various performances are easily kept, for example, even if the content of the plasticizer in the first resin layer is increased.
The average degree of polymerization of polyvinyl alcohol is determined by a method according to JIS K6726 "polyvinyl alcohol test method".
The aldehyde for use in acetalization is not particularly limited, an aldehyde having 1 to 10 carbon atoms is suitably used, an aldehyde having 3 to 5 carbon atoms is more preferable, an aldehyde having 4 or 5 carbon atoms is further preferable, and an aldehyde having 4 carbon atoms is particularly preferable.
The aldehyde having 1 to 10 carbon atoms is not particularly limited, and examples thereof include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde and benzaldehyde. In particular, acetaldehyde, propionaldehyde, n-butyraldehyde, isobutyraldehyde, n-hexylaldehyde or n-valeraldehyde is preferable, propionaldehyde, n-butyraldehyde, isobutyraldehyde or n-valeraldehyde is more preferable, n-butyraldehyde or n-valeraldehyde is further preferable, and n-butyraldehyde is most preferable. The aldehyde may be used singly or in combinations of two or more thereof.

The number of carbon atoms in an acetal group contained in the polyvinyl acetal resin is not particularly limited, and is preferably 1 to 10, more preferably 3 to 5, further preferably 4 or 5, particularly preferably 4. A specific acetal group is particularly preferably a butyral group, and accordingly, the polyvinyl acetal resin is preferably a polyvinyl butyral resin. In other words, in the present invention, the thermoplastic resin (1) in the first resin layer is preferably a polyvinyl butyral resin, both the thermoplastic resins (1) and (2) in the first and second resin layers are more preferably polyvinyl butyral resins, and all the thermoplastic resins (1), (2) and (3) in the first, second and third resin layers are further preferably polyvinyl butyral resins.

The content rate (amount of hydroxyl group) of a hydroxyl group in the polyvinyl acetal resin (1) is preferably 17% by mol or more, more preferably 20% by mol or more, and is, for example, 38% by mol or less, preferably 34% by mol or less. When the content rate of the hydroxyl group is equal to or more than the lower limit, the interlayer film is much more increased in adhesion force. The content rate is more preferably 30% by mol or less, further preferably 27% by mol or less, from the viewpoint that the polyvinyl acetal resin (1) absorbs the plasticizer to enhance noise barrier performance of laminated glass. The content rate of a hydroxyl group in the polyvinyl acetal resin (1) is 20% by mol or more, resulting in a high reaction efficiency and excellent productivity.

The respective content rates of hydroxyl groups in the polyvinyl acetal resin (2) and the polyvinyl acetal resin (3) are each, for example, 20% by mol or more, preferably 25% by mol or more, more preferably 28% by mol or more. When the content rates of the hydroxyl groups are each equal to or more than the lower limit, not only noise barrier performance is kept, but also flexural rigidity can be more enhanced. The respective content rates of hydroxyl groups in the polyvinyl acetal resin (2) and the polyvinyl acetal resin (3) are each preferably 38% by mol or less, more preferably 36% by mol or less, further preferably 34% by mol or less. When the content rates of the hydroxyl groups are each equal to or less than the upper limit, the polyvinyl acetal resin is easily precipitated in synthesis of the polyvinyl acetal resin.

The content rate of a hydroxyl group in the polyvinyl acetal resin (1) is preferably lower than the content rate of a hydroxyl group in the polyvinyl acetal resin (2), from the viewpoint of a much more enhancement in noise barrier performance. The content rate of a hydroxyl group in the polyvinyl acetal resin (1) is preferably lower than the content rate of a hydroxyl group in the polyvinyl acetal resin (3), from the viewpoint of a much more enhancement in noise barrier performance. The respective absolute values of the differences between the content rate of a hydroxyl group in the polyvinyl acetal resin (1) and the content rates of hydroxyl groups in the polyvinyl acetal resins (2) and (3) are each preferably 1% by mol or more. Thus, noise barrier performance can be much more enhanced. The respective absolute values of the differences in content rate are each more preferably 5% by mol or more from the above viewpoint. The respective absolute values of the differences between the content rates of the hydroxyl groups are each preferably 20% by mol or less.

The content rate of a hydroxyl group in the polyvinyl acetal resin is the value obtained by expressing a molar fraction as a percentage, the molar fraction being determined by dividing the amount of an ethylene group to which a hydroxyl group is bound, by the amount of the entire ethylene group in a main chain. The amount of an ethylene group to which a hydroxyl group is bound can be measured according to, for example, JIS K6728 "polyvinyl butyral test method".

The degree of acetalization of the polyvinyl acetal resin (1) is preferably 47% by mol or more, more preferably 55% by mol or more, further preferably 60% by mol or more, and preferably 85% by mol or less, more preferably 80% by mol or less, further preferably 75% by mol or less. When the degree of acetalization is equal to or more than the lower limit, compatibility between the polyvinyl acetal resin (1) and the plasticizer is enhanced. When the degree of acetalization is equal to or less than the upper limit, the amount of the remaining aldehyde in the resin can be decreased. The degree of acetalization means the degree of butyralization in a case where the acetal group is a butyral group and the polyvinyl acetal resin (1) is a polyvinyl butyral resin.

The respective degrees of acetalization (degrees of butyralization in the case of a polyvinyl butyral resin) of the polyvinyl acetal resin (2) and the polyvinyl acetal resin (3) are each preferably 55% by mol or more, more preferably 60% by mol or more, further preferably 63% by mol or more, and preferably 85% by mol or less, more preferably 80% by mol or less, further preferably 75% by mol or less. When the degrees of acetalization are each equal to or more than the lower limit, compatibility between the polyvinyl acetal resin and the plasticizer is enhanced. When the degrees of acetalization are each equal to or less than the upper limit, the amount of the remaining aldehyde in the resin can be decreased.

Each of the degrees of acetalization is the value obtained by expressing a molar fraction as a percentage, the molar fraction being determined by dividing the value obtained by subtracting the amount of an ethylene group to which a hydroxyl group is bound and the amount of an ethylene group to which an acetyl group is bound, from the amount of the entire ethylene group in a main chain, by the amount of the entire ethylene group in a main chain. The degree of

acetalization (degree of butyralization) may be calculated from the result measured by a method according to JIS K6728 "polyvinyl butyral test method".

The degree of acetylation (amount of acetyl group) of the polyvinyl acetal resin (1) is preferably 0.01% by mol or more, more preferably 0.1% by mol or more. The degree of acetylation is further preferably 7% by mol or more, particularly preferably 9% by mol or more, from the viewpoint that compatibility between the polyvinyl acetal resin and the plasticizer is enhanced and a large amount of the plasticizer is easily compounded. The degree of acetylation of the polyvinyl acetal resin (1) is preferably 30% by mol or less, more preferably 25% by mol or less, further preferably 24% by mol or less, particularly preferably 20% by mol or less. When the degree of acetylation is equal to or less than the upper limit, the interlayer film and laminated glass are enhanced in moisture resistance.

The respective degrees of acetylation of the polyvinyl acetal resin (2) and the polyvinyl acetal resin (3) are preferably 10% by mol or less, more preferably 2% by mol or less. When the degrees of acetylation are each equal to or less than the upper limit, the interlayer film and laminated glass are enhanced in moisture resistance. The degrees are not particularly limited, and are each preferably 0.01% by mol or more, more preferably 0.1% by mol or more.

The degree of acetylation is the value obtained by expressing a molar fraction as a percentage, the molar fraction being determined by dividing the amount of an ethylene group to which an acetyl group is bound, by the amount of the entire ethylene group in a main chain. The amount of an ethylene group to which an acetyl group is bound can be measured according to, for example, JIS K6728 "polyvinyl butyral test method".

(Ethylene-vinyl acetate copolymer resin)

The ethylene-vinyl acetate copolymer resin may be a non-crosslinked ethylene-vinyl acetate copolymer resin or a high-temperature crosslinked ethylene-vinyl acetate copolymer resin. The ethylene-vinyl acetate copolymer resin here used can also be an ethylene-vinyl acetate-modified resin such as a saponified product of an ethylene-vinyl acetate copolymer or a hydrolyzed product of ethylene-vinyl acetate.

The content of vinyl acetate in the ethylene-vinyl acetate copolymer resin, as measured according to JIS K 6730 "ethylene-vinyl acetate resin test method", is preferably 10 to 50% by mass, more preferably 20 to 40% by mass. When the content of vinyl acetate is equal to or more than the lower limit value, adhesiveness to, for example, a glass plate is improved and furthermore penetration resistance of laminated glass is easily improved. When the content of vinyl acetate is equal to or less than the upper limit value, rupture strength of the interlayer film is increased and impact resistance of laminated glass is improved.

(Ionomer resin)

An ionomer resin is not particularly limited, and various ionomer resins can be used. Specific examples include an ethylene-based ionomer, a styrene-based ionomer, a perfluorocarbon-based ionomer, a telechelic ionomer and a polyurethane ionomer. In particular, an ethylene-based ionomer is preferable from the viewpoint that laminated glass is improved in, for example, mechanical strength, durability and/or transparency and from the viewpoint that, when a glass plate is inorganic glass, adhesiveness to such a glass plate is excellent.

An ionomer of an ethylene-unsaturated carboxylic acid copolymer is suitably used as the ethylene-based ionomer because of being excellent in transparency and toughness. The ethylene-unsaturated carboxylic acid copolymer is a copolymer having at least an ethylene-derived structural unit and an unsaturated carboxylic acid-derived structural unit, and may have other monomer-derived structural unit.

Examples of the unsaturated carboxylic acid include acrylic acid, methacrylic acid and maleic acid, and acrylic acid and methacrylic acid are preferable. Examples of such other monomer include acrylate, methacrylate and 1-butene.

The ethylene-unsaturated carboxylic acid copolymer preferably has 75 to 99% by mol of an ethylene-derived structural unit and preferably has 1 to 25% by mol of an unsaturated carboxylic acid-derived structural unit, under the assumption that all structural units in the copolymer correspond to 100% by mol.

The ionomer of the ethylene-unsaturated carboxylic acid copolymer is an ionomer resin obtained by at least partially neutralizing or crosslinking a carboxyl group in the ethylene-unsaturated carboxylic acid copolymer by a metal ion, and the degree of neutralization of the carboxyl group is usually 1 to 90%, preferably 5 to 85%.

Examples of an ion source in the ionomer resin include alkali metals such as lithium, sodium, potassium, rubidium and cesium, and polyvalent metals such as magnesium, calcium and zinc, and sodium and zinc are preferable.

The ionomer resin is not particularly limited in terms of the production method, and can be produced by a conventionally known production method. For example, in a case where the ionomer of the ethylene-unsaturated carboxylic acid copolymer is used as the ionomer resin, for example, ethylene and unsaturated carboxylic acid are radically copolymerized at a high temperature and at a high pressure, and thus the ethylene-unsaturated carboxylic acid copolymer is produced. The ethylene-unsaturated carboxylic acid copolymer and a metal compound comprising the ion source are reacted, and thus the ionomer of the ethylene-unsaturated carboxylic acid copolymer can be produced.

(Polyurethane resin)

Examples of the polyurethane resin include polyurethane obtained by reacting an isocyanate compound and a diol compound, and polyurethane obtained by reacting an isocyanate compound, a diol compound, and a chain extender such as polyamine. The polyurethane resin may contain a sulfur atom. In this case, the diol may be partially or fully one selected from polythiol and sulfur-containing polyol. The polyurethane resin can improve adhesiveness to organic glass. Thus, the polyurethane resin is suitably used in a case where a glass plate is organic glass.

(Thermoplastic elastomer)

Examples of the thermoplastic elastomer include a styrene-based thermoplastic elastomer and an aliphatic polyolefin. The styrene-based thermoplastic elastomer is not particularly limited, and known one can be used. The general styrene-based thermoplastic elastomer generally has a polymer block of a styrene monomer, serving as a hard segment, and a polymer block of a conjugated diene compound, or a hydrogenated block thereof, serving as a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.
The aliphatic polyolefin may be a saturated aliphatic polyolefin or an unsaturated aliphatic polyolefin. The aliphatic polyolefin may be a polyolefin with a linear olefin as a monomer, or a polyolefin with a cyclic olefin as a monomer. The aliphatic polyolefin is preferably a saturated aliphatic polyolefin, from the viewpoint that the interlayer film is effectively enhanced in storage stability and noise barrier performance.
Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene and vinyl cylcohexane.

(Plasticizer)

Hereinafter, the respective plasticizers for use in the first, second and third resin layers are described. In the following description, the plasticizers (1), (2) and (3) for use in the first, second and third resin layers are collectively described.
Examples of the plasticizers for use in the first, second and third resin layers include organic ester plasticizers such as a monobasic organic acid ester and a polybasic organic acid ester, and phosphorus plasticizers such as an organic phosphate plasticizer and an organic phosphite plasticizer. In particular, an organic ester plasticizer is preferable. The plasticizer is preferably a liquid plasticizer. The liquid plasticizer is a plasticizer which is liquid at ordinary temperature (23°C) and ordinary pressure (1 atm).
Examples of the monobasic organic acid ester include an ester of glycol and monobasic organic acid. Examples of the glycol include polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol where the number of carbon atoms is 2 to 4, preferably 2 or 3, and the number of repeating units is 1.
Specific examples of the glycol include ethylene glycol, diethylene glycol, triethylene glycol, tetraethylene glycol, propylene glycol, dipropylene glycol, tripropylene glycol, tetrapropylene glycol and butylene glycol.
Examples of the monobasic organic acid include an organic acid having 3 to 10 carbon atoms, and specifically include butyric acid, isobutyric acid, caproic acid, 2-ethylbutyric acid, 2-ethylpentanoic acid, heptylic acid, n-octylic acid, 2-ethylhexylic acid, n-nonylic acid and decylic acid.
A preferable monobasic organic acid ester is, for example, a compound represented by the following formula (1):

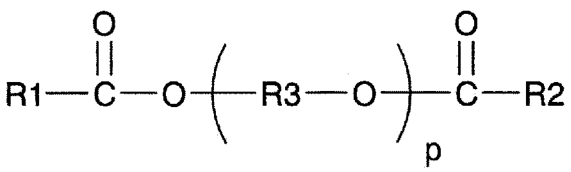

•••(1)

wherein R1 and R2 each represent an organic group having 2 to 10 carbon atoms, R3 represents an ethylene group, an isopropylene group or a n-propylene group, and p represents an integer of 3 to 10, and wherein R1 and R2 each

preferably have 5 to 10 carbon atoms, more preferably 6 to 10 carbon atoms. The organic groups in R1 and R2 are each preferably a hydrocarbon group, more preferably an alkyl group.

Specific examples of the glycol ester include ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol dicapryate, diethylene glycol di-2-ethylhexanoate, dipropylene glycol di-2-ethylbutyrate, triethylene glycol di-2-ethylhexanoate, triethylene glycol dicaprylate, triethylene glycol di-2-ethylpentanoate, triethylene glycol di-n-heptanoate, triethylene glycol di-2-ethylbutyrate, triethylene glycol di-2-ethyl propanoate, tetraethylene glycol di-n-heptanoate, tetraethylene glycol di-2-ethylhexanoate and tetraethylene glycol di-2-ethylbutyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, di-(2-butoxyethyl) adipate, dibutylcarbitol adipate and mixed adipate. For example, oil-modified sebacic acid alkyd may also be adopted. Examples of the mixed adipate include an adipate produced from two or more alcohols selected from an alkyl alcohol having 4 to 9 carbon atoms and a cyclic alcohol having 4 to 9 carbon atoms.

Examples of the organic phosphate plasticizer include phosphoric acid esters such as tributoxyethyl phosphate, isodecylphenyl phosphate and triisopropyl phosphate.

The plasticizer may be used singly or in combinations of two or more thereof.

The plasticizer is, in particular, preferably selected from di-(2-butoxyethyl) adipate (DBEA), triethylene glycol di-2-ethylhexanoate (3GO), triethylene glycol di-2-ethylbutyrate (3GH) and triethylene glycol di-2-ethylpropanoate, more preferably selected from triethylene glycol di-2-ethylhexanoate (3GO), triethylene glycol di-2-ethylbutyrate (3GH) and triethylene glycol di-2-ethylpropanoate, further preferably selected from triethylene glycol di-2-ethylhexanoate and triethylene glycol di-2-ethylbutyrate, particularly preferably triethylene glycol di-2-ethylhexanoate.

[Method for producing interlayer film]

The interlayer film can be produced by obtaining a resin composition for formation each of the layers, forming each of the layers (for example, first resin layer, second resin layer, and third resin layer) constituting the interlayer film, from the resin composition, and laminating the layers for integration. The interlayer film can also be produced by forming each of the layers constituting the interlayer film, by co-extrusion and also laminating the layers for integration.

The resin composition for formation each of the layers may be obtained by mixing components constituting the resin composition, for example, a resin such as the thermoplastic resin, and the light diffusion particle, the plasticizer and other additive(s), if necessary, compounded, in a kneading apparatus or the like by a known method. For example, in a case where each layer constituting the interlayer film is formed using an extruder such as a coextruder, the components constituting the resin composition may be mixed in the extruder.

<Laminated glass>

The present invention further provides a laminated glass. The laminated glass of the present invention comprises paired glass members and the interlayer film placed between the paired glass members. The paired glass members may be bonded each other through the interlayer film. The laminated glass of the present invention has a total light transmittance (TvD) according to JIS R3106 (2019), of less than 70%.

When the total light transmittance of the laminated glass of the present invention is less than 70% as in the above interlayer film of the present invention, an object which is placed at an opposite side with the interlayer film being interposed and which is for use in image display, such as a light source apparatus, is hardly viewed and furthermore privacy protection performance can also be enhanced. The total light transmittance of the laminated glass is preferably 68% or less, more preferably 66% or less as in the above laminated glass, is not particularly limited, and is, for example, 10% or more, preferably 20% or more, more preferably 35% or more, further preferably 50% or more.

The total light transmittance (TvD) of the laminated glass is the value of the total light transmittance, obtained by subjecting the laminated glass to measurement according to JIS R3106 (2019).

The configuration of the interlayer film in the laminated glass is as described above, and the description thereof is omitted.

The haze of the laminated glass of the present invention is preferably 35% or more. The haze is more preferably 45% or more, further preferably 55% or more, particularly preferably 65% or more. When the haze of the laminated glass is in the range, image display at a high contrast is facilitated in use in an image display screen.

As illustrated in Figs. 1 and 2, glass members 21 and 22 are respectively laminated on both surfaces of an

interlayer film 10 in laminated glass 20 and 25. For example, as illustrated in Fig. 1, the interlayer film 10 has a first resin layer 11 and a second resin layer 12, and here such one glass member 21 may be laminated on a surface of the second resin layer 12 and such other glass member 22 may be laminated on a surface of the first resin layer 11. Furthermore, as illustrated in Fig. 2, an interlayer film 15 has first to third resin layers 11, 12 and 13, and here such one glass member 21 may be laminated on a surface of the second resin layer 12 and such other glass member 22 may be laminated on a surface of the third resin layer 13.

(Glass member)

The glass member for use in the laminated glass may be a glass plate. The glass plate may be either inorganic glass or organic glass, and inorganic glass is preferable. The inorganic glass is not particularly limited, and examples thereof include clear glass, clear float glass, float plate glass, reinforced glass, colored glass, polished plate glass, figured glass, meshed plate glass, wired plate glass, ultraviolet absorption plate glass, infrared reflection plate glass, infrared absorption plate glass and green glass.

The organic glass here used is one generally called resin glass and is not particularly limited, and examples thereof include organic glass formed from, for example, a polycarbonate plate, a polymethyl methacrylate plate or a polyester plate.

The respective materials forming such two glass members may be the same as or different from each other. For example, one thereof may be inorganic glass and the other thereof may be organic glass, and preferably both the two glass members are inorganic glass or organic glass.

The respective thicknesses of the glass members are not particularly limited, and are each preferably 0.5 mm or more and 5 mm or less, more preferably 0.7 mm or more and 3 mm or less.

The method for producing the laminated glass is not particularly limited. For example, the interlayer film is sandwiched between the two glass members, and these members are allowed to pass through a pressing roll or are placed in a rubber bag and evacuated under reduced pressure, to thereby allow air remaining between the two glass members and the interlayer film to be degassed. Thereafter, the glass members are preliminarily bonded with the interlayer film at about 70 to 110°C, to obtain a laminate. Next, the laminate is placed in an autoclave or pressed, and then is compression bonded at about 120 to 150°C and at a pressure of 1 to 1.5 MPa. Thus, the laminated glass can be obtained. In production of the laminated glass, the laminated glass may also be produced, for example, with a plurality of resin layers being laminated for integration to thereby form the interlayer film.

[Application of interlayer film for laminated glass]

In one embodiment of the present invention, the interlayer film for laminated glass (namely, laminated glass) is used in an image display screen. Specifically, one surface of the laminated glass may be irradiated with light from a light source apparatus constituting a projector or the like, and the light for irradiation may be scattered on the interlayer film for laminated glass and displayed in the form of an image on the laminated glass.

The image display screen may be a rear-projection or front projection image display screen, and is preferably a rear-projection image display screen. Use in the form of rear-projection allows image display at a high contrast to be easily realized.

A rear-projection image display screen is a screen for which allows one surface of the laminated glass to be irradiated with light from a light source apparatus and allows an image to be observed from other surface of the laminated glass. A front projection image display screen is a screen which allows one surface of the laminated glass to be irradiated with light from a light source apparatus and allows an image to be observed from such one surface of the laminated glass (namely, a surface irradiated with light from a light source apparatus).

The present invention also provides an image display system where the laminated glass is used in an image display screen, as described above. The image display system comprises the laminated glass and a light source apparatus for irradiation of one surface of the laminated glass with light, and displays an image on the laminated glass by light from the light source apparatus. The image display system may be either rear-projection one or front projection one, as described above, and is preferably rear-projection one.

Hereinafter, one embodiment of the rear-projection image display system is described in detail with reference to Fig. 3.

An image display system 30 according to one embodiment of the present invention comprises laminated glass 31 and a light source apparatus 32. The laminated glass 31 may have any structure of the laminated glass described above. The image display system 30 allows one surface (rear surface 31B) of the laminated glass 31 to be irradiated with light by the light source apparatus 32 and allows an image to be displayed by the light for irradiation, from other surface (front surface 31F) of the laminated glass 31. The image at the front surface 31F side is viewed by an observer OB located in front of the laminated glass 31. The image displayed from the front surface 31F may be a screen image

such as a moving image, or may be, for example, a still image, a message including a character, an icon and/or a trademark, or a logo, and is not particularly limited.

The light source apparatus 32 used can be a light source conventionally used in a rear-projection image display system, and is, for example, a projector capable of producing various images such as a screen image. The projector used is preferably, for example, a screen image display system utilizing a digital mirror device, known as a so-called DLP (registered trademark) projector.

In a case where, for example, a fixed icon or a fixed message is displayed with no change of an image produced, no projector is needed to be used and a light source apparatus for irradiating the laminated glass 31 with certain light depending on the image may be used.

The light for irradiating the laminated glass 31 in the rear-projection system is light corresponding to an image mirror-reversed relative to an image displayed. The method of irradiation with the light corresponding to the image mirror-reversed is not particularly limited, and mirror-reversing may be made by adjustment of an image signal or by use of, for example, a reversing mirror.

The light emitted from the light source apparatus 32 in the image display system 30 may be used for direct irradiation of the laminated glass 31, or for irradiation of the laminated glass 31 via an optical member such as a reflecting mirror or a reversing mirror.

The interlayer film for laminated glass and the laminated glass of the present invention can be used in various fields, and are used in, for example, various types of window glass. More specifically, these can be used in window glass for conveyances such as automobiles, railway vehicles, airplanes and marine vessels, or window glass for buildings. The interlayer film for laminated glass or the laminated glass can be used in various types of window glass, to thereby allow various images such as a screen image, a message and a logo to be displayed in window glass. The interlayer film or the laminated glass can also be used in a display for various electric instruments such as household electric instruments. In particular, the interlayer film or the laminated glass is preferably used in window glass, and is more preferably used in window glass for automobiles. The window glass for automobiles is preferably side glass or rear glass, more preferably rear glass, because the total light transmittance is less than 70%. In a case where the first resin layer is provided on a partial region of the interlayer film for laminated glass, as described above, use in front glass is also preferable.

For example, in the case of use in window glass for buildings, a light source apparatus may be disposed in each of such buildings, an inside surface of the window glass may be irradiated with light from the light source apparatus, and thus various images may be displayed on an outside surface of the window glass. Similarly, in the case of use in window glass for conveyances, a light source apparatus may be disposed in each of such conveyances and thus various images may be displayed on an outside surface of the window glass.

An outside surface of window glass for buildings or conveyances may also be irradiated with light from a light source apparatus and thus an image may also be displayed on an inside surface of the window glass. Specifically, a light source apparatus may be disposed on, for example, a bonnet or a trunk of an automobile, side glass, rear glass and/or the like may be irradiated with light from outside, and thus an image may be displayed on an inside surface of such glass.

Window glass utilizing the interlayer film of the present invention can also be used as window glass high in privacy protection performance, because, although light penetrates through the window glass, a person or object is hardly viewed through the window glass.

<Image display system according to another aspect>

Another aspect of the present invention relates to, for example, an image display system utilizing glass for conveyances, for use in various vehicles such as automobiles, and provides the following image display system. An image display system according to another aspect of the present invention can, for example, send various messages and display various images toward the vehicle exterior and/or the vehicle interior, by a simple configuration.

Hereinafter, an image display system according to another aspect is described in detail.

An image display system according to another aspect of the present invention comprises display glass, and a light source apparatus for irradiating one surface of the display glass with light, and displays an image on the display glass by light from the light source apparatus. The display glass is glass for conveyances, for use in window glass for various vehicles such as automobiles.

The display glass in the image display system may comprise a layer comprising a light diffusion particle. When the display glass is irradiated with light from the light source apparatus, light-scattering occurs due to the light diffusion particle and an image is displayed on the display glass.

The layer comprising the light diffusion particle may be provided on the entire region of the display glass, or may be provided on a partial region of the display glass.

The image display system is a projection system where the display glass is used as an image display screen,

and the display glass may be used as a rear-projection image display screen. The rear-projection image display screen is a screen which allows light from the light source apparatus to be incident on one surface of the display glass and allows an image to be observed from other surface of the display glass. The light from the light source apparatus is visible light corresponding to an image to be displayed. The light for irradiation from the light source apparatus may be monochromatic light, and is preferably light obtained by combining a plurality of colors. Such a plurality of colors in the light for irradiation from the light source apparatus can be combined to also allow for display of a full color image on the display glass.

One surface of the display glass, on which the light from the light source apparatus is to be incident, is a surface at a vehicle interior side, other surface thereof is a surface at a vehicle exterior side, and an image is preferably displayed toward the vehicle exterior, or vice versa. In other words, an image is displayed on a surface of the display glass, the surface being at a vehicle interior side, and the image is displayed toward the vehicle interior, and also the light from the light source apparatus may be allowed to be incident on a surface opposite thereto.

The display glass in the image display system may comprise the light diffusion particle and thus have an opaque white color, or may be an embodiment where a colorant described below is comprised to thereby appropriately add a color to an opaque white color.

The total light transmittance (TvD) of the display glass in the image display system is, for example, less than 70%. When the total light transmittance is less than 70%, light-scattering sufficiently occurs on the display glass and image display at a high contrast can be made. Moreover, the internal portion of a vehicle is hardly viewed via the display glass, and privacy protection performance can also be enhanced. The total light transmittance (TvD) of the display glass in the image display system is preferably 50% or less, from these viewpoints. The total light transmittance (TvD) is not particularly limited, and is, for example, 10% or more, preferably 20% or more. When the total light transmittance (TvD) is equal to or more than the lower limit value, image display toward the vehicle exterior is facilitated at a high contrast. In the present invention, the total light transmittance (TvD) is the value measured according to JIS R3106 (2019).

The display glass in the image display system is low in total light transmittance, as described above, and thus is provided at a position where no high transparency is needed.

When a region (also referred to as "light diffusion region") where the layer comprising the light diffusion particle is provided is partially provided as described above, the total light transmittance (TvD) of the display glass in the image display system is the total light transmittance (TvD) of the light diffusion region. In such a case, the total light transmittance (TvD) of a region (also referred to as "transparent region") where the layer comprising the light diffusion particle (namely, the first resin layer described below) is not provided is preferably 70% or more, more preferably 75% or more, further preferably 80% or more, and practically 99% or less, preferably 97% or less. Thus, a region where the total light transmittance (TvD) is high is provided, and thus the display glass can be prevented from hindering driving even if being, for example, front glass.

The light diffusion region may differ in total light transmittance with respect to each position due to placement of a region where the thickness of the first resin layer is gradually changed as described below, and in such a case, the total light transmittance of a partial region may be in the range, and that of a region exhibiting the lowest total light transmittance may be preferably in the above numerical value range.

The light source apparatus in the image display system, here used, can be a light source conventionally used in a rear-projection image display system, and is, for example, a projector capable of producing various images such as a screen image. The projector used is preferably, for example, a screen image display system using a digital mirror device, known as a so-called DLP (registered trademark) projector.

The image display system may comprise a touch sensor. The touch sensor is a sensor which senses a touch operation of, for example, a finger with the display glass. The touch operation sensed by the touch sensor is not necessarily required to be touch of, for example, a finger with the display glass. In other words, the touch sensor may be one which senses approaching of, for example, a finger to a predetermined position of the display glass. The touch sensor is not particularly limited in terms of the type thereof, and may be, for example, an IR type sensor, a gesture sensing type sensor or an ultrasonic type sensor.

The image display system may comprise a controller which is configured from, for example, a known processor and which controls operations of an automobile and various instruments attached to the automobile, display on the display glass, and/or the like, based on the input to the touch sensor. The image display system may also comprise, for example, a memory unit which is configured from, for example, a memory and which memorizes information input to the touch sensor, and a transmitter which is configured from a wireless communication instrument such as an antenna and which transmits information input to the touch sensor, to the vehicle exterior.

Hereinafter, application examples of the image display system are described in more detail with reference to embodiments of the image display system.

[First embodiment]

Figs. 4 and 5 each illustrate an image display system according to a first embodiment (hereinafter, sometimes simply referred to as "image display system 60"). In the first embodiment, the image display system 60 is applied to an automobile, and display glass is provided on a side surface portion of the automobile. The automobile in the present embodiment is a van type automobile. The internal portion of the automobile includes, for example, a front portion where a front seat is provided, and a back portion, and the back portion generally serves as a cargo space portion where a baggage is to be accommodated.

A front side door 62A provided with front side glass 61A is provided on a side surface portion of the automobile, and display glass 65 is placed backward thereof. A back side door may be provided backward of the front side door 62A and the display glass 65 may be provided on the back side door, but the back side door is not necessarily required to be provided as illustrated in Fig. 5. The display glass 65 is irradiated with light from a light source apparatus 63, and thus an image such as a screen image is displayed. The image is displayed toward the vehicle exterior, and, for example, advertising is displayed.

In the present embodiment, as illustrated in Fig. 5, the automobile is a van type automobile, and therefore the display glass can be sufficiently increased in area and thus is also suitable for advertising display. The automobile is not limited to a van type automobile, and may be any type of automobile.

The light source apparatus 63 in the present embodiment may be placed at a position where the display glass 65 can be irradiated with light, and is provided on a ceiling surface 64 of the automobile in the present embodiment, more specifically, is provided on a ceiling surface of a back portion (for example, cargo space portion) in the automobile.

[Second embodiment]

Figs. 6 and 7 each illustrate an image display system according to a second embodiment (hereinafter, sometimes simply referred to as "image display system 70"). In the second embodiment, the image display system 70 is applied to a truck and display glass 75 is provided on a rear surface of the truck.

Specifically, the truck comprises a cab 71 comprising, for example, a driver's seat, and a cargo space 72 located behind the cab 71. The cargo space 72 is a box comprising a roof (top surface 72T). A rear surface 72B of the cargo space 72 is at least partially constituted by the display glass 75. The rear surface 72B is constituted with, for example, as illustrated in Fig. 7, double two doors 72C and 72D. The display glass 75 is composed of two sheets of glass 75A and 75B constituting respective portions of the doors 72C and 72D, and is constituted as one screen with the two sheets of glass 75A and 75B when the doors 72C and 72 are closed, but is not limited to the embodiment, and, for example, the display glass 75 may be provided only by one of the doors. A door of the rear surface is not required to be composed of two doors, and may be composed of one door.

A light source apparatus 73 is provided in the cargo space 72, and may be provided on, for example, the top surface 72T of the cargo space 72. The display glass 75 is irradiated with light from the light source apparatus 73, and thus an image such as a screen image is displayed. The image is displayed toward the vehicle exterior.

In the present embodiment, a photographing apparatus not illustrated is provided in a truck, and the area in front of the truck is photographed by the photographing apparatus. An image taken by the photographing apparatus is sent to the light source apparatus 73, and the light source apparatus 73 may perform irradiation with light depending on the image taken. The image taken may be displayed on the display glass 75. While a general truck is high in vehicle height and may block the visibility from, for example, an automobile backward, an image of a front visibility can be displayed on the display glass 75 as described above, to thereby eliminate poor front visibility due to the truck.

Herein, the image displayed on the display glass 75 is not limited to the image of a front visibility, and may be advertising. In the present embodiment, as illustrated in Fig. 7, the automobile is a truck, and therefore the display glass 75 can be sufficiently increased in area and thus is also suitable for advertising display.

While the present embodiment indicates an embodiment where the display glass 75 is provided on the rear surface 72B of the cargo space 72, the display glass may also be provided on a side surface of the cargo space 72. An image displayed on the display glass 75 on the side surface may be, for example, advertising.

[Third embodiment]

Figs. 8 and 9 each illustrate an image display system according to a third embodiment (hereinafter, sometimes simply referred to as "image display system 80"). In the third embodiment, the image display system 80 is applied to a pickup truck, and display glass is provided on a rear surface of the pickup truck.

The pickup truck comprises a cab 81 and a cargo space 82 located behind the cab 81, and the cargo space 82 comprises no roof. In the present embodiment, rear glass 85 of the cab 81 is used as the display glass. A light source apparatus 83 is provided in the vehicle interior (namely, in the cab 81), and may be provided on a ceiling 84 of the cab

81. More specifically, the light source apparatus may be provided in the vicinity of a rear surface of the cab 81 or above a back row seat in the cab 81.

The display glass (rear glass 85) is irradiated with light from the light source apparatus 83, and thus an image such as a screen image is displayed. The image is displayed toward the vehicle exterior, various screen images are displayed, and an automobile that is high in entertainingness can be provided. For example, advertising may be displayed on the rear glass 85.

[Fourth embodiment]

Figs. 10 and 11 each illustrate an image display system according to a fourth embodiment (hereinafter, sometimes simply referred to as "image display system 90"). In the fourth embodiment, the image display system 90 is applied to an automobile, and front glass 91 is used as display glass of the image display system 90.

The light source 93 is placed in the vehicle interior of the automobile, and irradiates the front glass 91 constituting the display glass, with light. The light source 93 is provided, for example, on a ceiling 94 of the automobile, in a dashboard 95, or both thereof, as illustrated in Fig. 10. The light source 93, when provided on the ceiling 94, may be provided on a lamp portion such as a map lamp portion. In other words, the light source may be provided in a lamp cover 98 which covers a lamp for illumination of the interior.

The light source 93 may be any one as long as it can irradiate an image display region described below, with light, and, for example, the light source 93 provided on the ceiling 94 may irradiate an upper end portion 91A of the front glass 91, with light, and the light source 93 provided in the dashboard 95 may irradiate a lower end portion 91B of the front glass 91, with light.

In the present embodiment, the front glass 91 displays an image by light incident from the light source 93. The region where the image is displayed (image display region) may be a region not blocking the visibility of a driver, and is specifically the upper end portion 91A of the front glass 91, the lower end portion 91B of the front glass 91, or both thereof, indicated by solid lines in Fig. 11. The upper end portion 91A and the lower end portion 91B may be each a region having a height of, for example, 5 to 35% relative to the entire height of the front glass 91.

In the front glass 91 (display glass), the image display region may serve as a light diffusion region, and the central portion between the upper end portion 91A and the lower end portion 91B may serve as at least the above transparent region. Such a configuration enables the light diffusion region provided on the front glass 91 to be prevented from disturbing driving.

Examples of the image displayed on the front glass 91 include a message 97 to the vehicle exterior. Examples of the message 97 to the vehicle exterior include messages to, for example, automobiles, pedestrians and light vehicles located therearound. Such light vehicles include bicycles and motorcycles. Specifically, a message which indicates the driving state and/or the next movement of the automobile to other automobiles, pedestrians, light vehicles and the like, for example, "Please Go Ahead" may be displayed as illustrated in Fig. 11. The message 37 is not required to be configured from a character, and may be configured from a design or may be configured from a character and a design.

The message 97 may be displayed on the display glass by, for example, calling at least one of the message candidates by a switching operation with a passenger such as a driver ,one or more message candidates previously memorized in a memory provided in the automobile.

The message may also be displayed on light emission glass based on sound input from a microphone provided in the automobile. The sound input may be here displayed on the light emission glass, as it is, or one or more messages selected from a plurality of message candidates may be displayed on the light emission glass based on the sound input.

[Fifth embodiment]

Figs. 12 and 13 each illustrate an image display system according to a fifth embodiment (hereinafter, sometimes simply referred to as "image display system 100"). In the fifth embodiment, the image display system 100 is applied to an automobile, and rear glass 101 is used as display glass of the image display system 100.

A light source 103 is placed on the vehicle interior of an automobile, and irradiates the rear glass 101 constituting the display glass, with light. The light source 103 is provided on, for example, a ceiling 104 of an automobile, as illustrated in Fig. 12, and is specifically provided in the vicinity of the rear glass 101. In the present embodiment, the rear glass 101, on which light is incident from the light source 103, thus allows an image corresponding to the light to be displayed on the rear glass 101.

Examples of the image displayed on the rear glass 101 include a message 107 to the vehicle exterior. Examples of the message 107 to the vehicle exterior include messages to, for example, automobiles, pedestrians and light vehicles located therearound. Specifically, a message which indicates, for example, the driving state and/or the next movement of the automobile, and/or emergency information, to other automobiles, pedestrians, light vehicles and the like may be displayed.

The message 107 may be configured from a design or the like, as illustrated in Fig. 13, or may be configured from a character or may be configured from a combination of a character and a design, as indicated also in the fourth embodiment. The design here displayed may be a design meaning a left turn, U-turn or stopping, or may be, for example, an emoticon, as illustrated in Fig. 13.

The message 107 may be displayed based on, for example, a switching operation and/or sound input, as in the fourth embodiment.

[Sixth embodiment]

Figs. 14 to 17 each illustrate an image display system according to a sixth embodiment (hereinafter, sometimes simply referred to as "image display system 110"). In the sixth embodiment, the image display system 110 is applied to an automobile, and side glass 111 is used as display glass of the image display system 110. The side glass 111 is generally provided on an upper portion of a side door 112.

The side glass 111 is typically, for example, front side glass 111A provided in a front side door 112A or rear side glass 111B provided in a rear side door 112B. The rear side glass 111B in the side glass 111 may serve as display glass, as illustrated in Fig. 15. The display glass in the image display system, while is low in total light transmittance as described above, is provided in the rear side glass 111B not to thereby block a driver's visibility.

The light source 113 is placed in the vehicle interior of the automobile, and irradiates the side glass 111 constituting the display glass, with light. The light source 113 is provided on, for example, a side door 112 or a ceiling 114 of the automobile, as illustrated in Fig. 14. While Fig. 14 illustrates an embodiment where the light source 113 is provided on both the side door 112 and the ceiling 114, the light source is usually provided on any one of the side door 112 and the ceiling 114. The light source 113, when provided on the ceiling 114, may be provided on, for example, a lamp portion. In other words, the light source may be provided inside a lamp cover which covers a lamp for illumination of the interior. The lamp portion may be a lamp provided above a portion (for example, back row seat) behind a front seat, called roof lamp, from the viewpoint that the rear side glass 111B is easily irradiated with light.

The light source 113, when provided on the side door 112, may be provided in, for example, a side door trim 112C, and specifically may be provided on the rear side door 112B in order to irradiate the rear side glass 111B with light.

An image displayed on a side door 12 is an image to be displayed toward the vehicle exterior, as illustrated in Fig. 15, and is configured from, for example, one or more characters, one or more designs, or a combination thereof, as illustrated in Figs. 15 to 17. The characters or designs may be each, for example, a symbol, an icon, a diagram or a graphic.

Examples of the image displayed on the side door 112 more specifically include a message, an input operation key and a character input position guide.

The message in the present embodiment is a message mainly toward a passenger such as a driver before riding in the automobile or after exiting from the automobile. Examples of the message include a text, a design, and a combination of a text and a design. Specific examples include a greeting for a passenger, a message which indicates the state of the automobile, a warning message, and entertainment information. One or more of such messages may be displayed on each display glass.

Specific examples of the message include greetings 120A such as "Welcome Open", "Hi Dylan", "Good Morning" and "Have a nice evening", various messages indicating the state of the automobile, such as a message 120B indicating the opening and closing state of a door, a message 120C indicating the state of a battery, for example, the charging rate, a message 120D indicating the remaining amount of fuel, and a message 120E indicating the state of tire pressure, a warning message 120F indicating needs for maintenance, charging, and exchange of tire, a trademark 120G indicating, for example, the name of an automobile manufacturer, and code characters such as a QR code (registered trademark) 120H and a bar code (not illustrated), as illustrated in Figs. 15 and 16. Such code characters may indicate entertainment information such as information of a nearby shop. Such entertainment information may also be indicated by any other than such code characters.

Examples of the input operation key include a key button 121, as illustrated in Fig. 17. The input operation key, although not illustrated, may be, for example, a numeric keypad or a keyboard. Examples of the character input position guide include a blank box 122 for indicating the position of a blank for input of a character such as a signature with finger movement, and the character input position guide may be, for example, an arrow or an underline, or may be indicated by a message with, for example, a character.

The operation key and the character input position guide may be used in combination with a touch sensor. In other words, a behavior of touching the operation key may be sensed by the touch sensor, and thus input information from the touch sensor may allow a behavior of the automobile to be controlled, the input information may be memorized in a memory unit in the automobile and/or the input information may be transmitted to the vehicle exterior. The input information may also allow display of the display glass to be changed, or allow behaviors of various instruments provided in the automobile to be controlled.

More specifically, the automobile may be unlocked by a password and/or a passcode input by the operation key. The automobile may be unlocked by entering a password and/or a signature in a blank whose position is indicated by the character input position guide. A touch operation to a specified operation key may be performed to thereby switch the image displayed on the display glass.

The touch sensor is not required to be used in combination with the operation key and the character input position guide, and image display may be initiated by, for example, performing a touch operation to side glass. Herein, image display on the side glass is not limited to be initiated by a touch operation, and may also be initiated by approximating an automobile key.

The operation key and the character input position guide may be displayed on the same side glass 111 (for example, rear side glass), together with a message 123, as illustrated in Fig. 17. Such a configuration can allow the message 123 to display an operation of the operation key, or information to be input to a blank indicated on the character input position guide, resulting in enhancement of usability.

For example, in a display embodiment in Fig. 17, not only a blank box 122, but also a message 123 indicating that a signature is to be given in such a blank in a case where the contractual coverage is acceptable is displayed, and thus a passenger may give a signature according to the message 123. The display embodiment illustrated in Fig. 17 may be applied to, for example, an automobile for use in a rental car or in car sharing.

[Seventh embodiment]

Figs. 18 to 20 each illustrate an image display system according to a seventh embodiment (hereinafter, sometimes simply referred to as "image display system 130"). In the seventh embodiment, the image display system 130 is applied to a self-driving car, and display glass 135 is provided on a part of the outer periphery of the self-driving car. The display glass 135 may be front glass provided on a front surface of the self-driving car, rear glass provided on a rear surface of the self-driving car, or side glass provided on a side surface of the self-driving car. Fig. 19 illustrates an embodiment where the front glass is the display glass 135, and Fig. 20 illustrates an embodiment where the side glass is the display glass 135.

The self-driving car is used as, for example, a freight truck such as a last one mile truck, or may be a self-driving car for use in other applications.

A light source 133 is placed in the vehicle interior of the self-driving car, as illustrated in Fig. 18, and irradiates the display glass 135, with light. The light source 133 may be provided on, for example, a ceiling 134 of the self-driving car, as illustrated in Fig. 18. Also in the present embodiment, the display glass 135, on which light is incident from the light source 133, thus allows an image corresponding to the light to be displayed.

The image displayed on the display glass 135 may be, for example, a message, a screen image and/or advertising toward the vehicle exterior. The message may display, for example, the driving state during driving. A serial number, for example, the serial number of a baggage, may be displayed after arrival at destination.

The image may be, for example, an input operation key or a character input position guide, as indicated in the sixth embodiment (see Fig. 17), or may be, for example, a combination of an input operation key, or a character input position guide and a message, as described in the sixth embodiment. In a case where the input operation key or the character input position guide is displayed, the image display system 130 may further comprise a touch sensor as detailed in the sixth embodiment.

For example, in a case where the self-driving car is used as a freight truck and the input operation key or the character input position guide is displayed in the image, a key of the self-driving car may be released by inputting a passcode and/or a password by the input operation key, or inputting a signature, a passcode and/or a password according to the character input position guide. Consequently, a door of the self-driving car may be opened and a baggage can be received, for example. Such a configuration can allow a baggage to be delivered even without any deliverer, by releasing the key of the self-driving car by a baggage receiver. In a case where the baggage receiver gives a signature according to, for example, the character input position guide, the image display system 130 can save the signature information in, for example, a memory unit, or transmit it by a transmitter to the outside.

Additionally, in the present embodiment, display glass constituting window glass of the self-driving car is low in total light transmittance, and thus a load is hardly seen from the outside and privacy can be ensured .

[Eighth embodiment]

Figs. 21 and 22 each illustrate an image display system according to an eighth embodiment (hereinafter, sometimes simply referred to as "image display system 140"). In the eighth embodiment, the image display system 140 is applied to an automobile, and display glass 145 may be placed in an instrument panel in front of a driver's seat of the automobile, facing the driver's seat. A light source apparatus 143 is placed further in front of the display glass 145. An accommodating unit 146 which accommodates various parts therein is provided in front of the display glass 145, and

the light source apparatus 143 is also accommodated in the accommodating unit 146.

The above configuration allows light from the light source apparatus 143 to be incident on a surface of the display glass 145, the surface being opposite to a surface (namely, surface at the vehicle interior side) thereof facing the driver's seat, and an image is displayed on the surface of the display glass 145 facing the driver's seat, based on the incident light.

The image displayed on the display glass 145 may comprise images of various meters indicating the state of the automobile to the driver, and specific examples include a speed indicator, an indicator of the remaining amount of fuel, an engine speed indicator and a travel distance indicator. Moreover, displays for audios or car navigation systems of the automobile, or key buttons and the like for operating them may also be displayed. Moreover, key buttons and the like for operating, for example, on-off of, for example, a direction indicator, a defroster, a defogger and a wiper, opening and closing of window glass, and opening and closing of a door may be displayed.

The image display system 140 may comprise a touch sensor, as in the sixth embodiment, and a behavior of the automobile, or behaviors of various instruments (audios, car navigation systems, and the like) attached to the automobile may be controlled by a controller, based on the input to the touch sensor. In the present embodiment, the touch sensor is provided to result in a more enhancement in usability of the instrument panel.

The first to eighth embodiments described above merely exemplify embodiments of image display, and any image may be displayed on the display glass of each vehicle. The touch sensor, although shown with an example of an application to side glass or an instrument panel of an automobile, in the sixth and eighth embodiments, may be applied to other window glass such as rear glass of an automobile. The image display system may be applied to any conveyance other than an automobile and a self-driving car, and, for example, the display glass may be window glass of any vehicle other than an automobile and a self-driving car.

[Configuration of display glass in image display system]

Next, the configuration of display glass for use in an image display system according to another aspect is described in detail. The display glass in the image display system may comprise a layer comprising a light diffusion particle, and is preferably laminated glass. The laminated glass comprises two glass members and an interlayer film for laminated glass, placed between the two glass members, and the interlayer film for laminated glass allows the two glass members to adhere.

The interlayer film for laminated glass may have a single-layer structure or a multiple-layer structure, and in both cases, at least one layer may comprise the layer comprising a light diffusion particle (first resin layer).

A configuration of preferable laminated glass is illustrated in Figs. 23 and 24. As illustrated in Fig. 23, laminated glass 150 comprises a first glass member 151A, a second glass member 151B, and an interlayer film 153 for laminated glass, placed between the glass members 151A and 151B. The interlayer film 153 for laminated glass comprises a second resin layer 155, a first resin layer 154 comprising a light diffusion particle, and a third resin layer 156 in the listed order from the first glass member 151A side, and the second and third resin layers 155 and 156 may respectively adhere to the first and second glass members 151A and 151B.

The laminated glass 150 may comprise a fourth resin layer 157 in addition to the first to third resin layers 154 to 156. In this case, the interlayer film 153 for laminated glass comprises a fourth resin layer 157, a second resin layer 155, a first resin layer 154 comprising a light diffusion particle, and a third resin layer 156 in the listed order from the first glass member 151A side, and the fourth and third resin layers 157 and 156 may respectively adhere to the first and second glass members 151A and 151B.

The interlayer film for laminated glass, although not illustrated, may have a two-layer structure, for example, the third resin layer 156 may be omitted in the configuration illustrated in Fig. 23, and in this case, the first and second resin layers 155 and 154 may respectively adhere to the first and second glass members 151A and 151B.

In the laminated glass 150, light from a light source apparatus may be incident through a surface at the second glass member 151B side, and image display may be made on a surface of the first glass member 151A.

The light diffusion particle is not particularly limited as long as it is a compound which can scatter light incident into the laminated glass (display glass), and specific examples thereof include inorganic substances such as calcium carbonate, silica, titanium oxide, glass flake, mica, alumina and aluminum. Such compounds may be used singly or in combinations of two or more thereof. In particular, calcium carbonate, silica, or titanium oxide is preferable, and calcium carbonate is more preferable, from the viewpoint of, for example, light-scattering ability.

In the layer comprising a light diffusion particle (namely, first resin layer), the concentration of the light diffusion particle is not particularly limited, and is, for example, 6 to 50% by mass.

In the laminated glass 150 illustrated in Fig. 23, any of the resin layers 154 to 156 may comprise a colorant, and the first resin layer 154 or the second resin layer 155 preferably comprises a colorant. Also in the case of the above two-layer structure, the first resin layer 154 or the second resin layer 155 preferably comprises a colorant.

In the laminated glass 150 illustrated in Fig. 23, any of the resin layers 154 to 157 may comprise a colorant,

and the fourth resin layer 157 preferably comprises a colorant.

Thus, when the first resin layer comprising a light diffusion particle, or a resin layer placed at an observation side with respect to the first resin layer comprises a colorant, an image displayed has a higher contrast and the image can be efficiently displayed.

The concentration of the colorant in each of the resin layers is, for example, 0.005 to 0.4% by mass.

The light diffusion particle and the colorant in each of the resin layers may be dispersed in and compounded with resin component(s) constituting the resin layer.

Herein, the colorant is not required to be comprised in the resin layers constituting the interlayer film for laminated glass, and, for example, a colored layer may be located on a surface of any of the glass members, or the glass member(s) used may be a glass comprising the colorant. The colored layer is preferably provided on a surface of the first glass member 151A. Such an embodiment allows the colored layer to be placed at an observation side with respect to the first resin layer, allows an image displayed to have a higher contrast, and enables the image to be efficiently displayed.

The colored layer may be provided on a surface (lower surface in Figs. 23 and 24) of the first glass member 151A, the surface being at the interlayer film side, or may be provided on a surface (upper surface in Figs. 23 and 24) of the glass member 151A, the surface being opposite to the surface at the interlayer film side.

The colored layer is a coating film formed on a surface of each of the glass members, and may be any embodiment as long as it comprises a colorant, and the coating film may comprise, if necessary, a binder component such as a thermosetting resin or a thermoplastic resin, and may further appropriately comprise additive(s).

The colorant used is color matter such as a pigment or a dye, and in particular, preferably comprises a carbonaceous material. By comprising a carbonaceous material, stray light is effectively absorbed to easily result in a much more increase in contrast in image display. The carbonaceous material is preferably carbon black.

The colorant used may be a combination of the carbonaceous material such as carbon black and other color matter than the carbonaceous material. Such a colorant combination can not only increase the contrast in image display, but also color the laminated glass to a desired color and enhance design ability.

The resin for use in each of the resin layers may be a thermoplastic resin. Examples of the thermoplastic resin include a polyvinyl acetal resin, an ethylene-vinyl acetate copolymer resin, an ionomer resin, a polyurethane resin and a thermoplastic elastomer, and in particular, a polyvinyl acetal resin is preferable.

Each of the resin layers constituting the interlayer film for laminated glass may comprise a plasticizer. The resin layer may further comprise, if necessary, additive(s) such as a moisture resistance enhancer, an adhesion force modifier, an infrared absorber, an antioxidant, a light stabilizer, a fluorescent whitener, a crystal nucleator and/or a dispersant.

The thickness of the interlayer film for laminated glass is not particularly limited, and is preferably 0.2 to 3.0 mm.

In a case where the interlayer film for laminated glass has a multiple-layer structure, the thickness of the first resin layer is preferably 20 to 250 μm and preferably 150 μm or less. The respective thicknesses of the second and third resin layers are not particularly limited, and are each preferably 50 μm to 1.5 mm. The thickness of the fourth resin layer is not particularly limited, and is preferably 50 μm to 1.5 mm.

Each of the glass members (first and second glass members 151A and 151B) for use in the laminated glass may be a glass plate. The glass plate may be either inorganic glass or organic glass, and inorganic glass is preferable. The inorganic glass is not particularly limited, and examples thereof include clear glass, clear float glass, float plate glass, reinforced glass, colored glass, polished plate glass, figured glass, meshed plate glass, wired plate glass, ultraviolet absorption plate glass, infrared reflection plate glass, infrared absorption plate glass and green glass.

The organic glass used is one generally called resin glass and is not particularly limited, and examples thereof include organic glass formed from, for example, a polycarbonate plate, a polymethyl methacrylate plate or a polyester plate.

The respective thicknesses of the glass members are not particularly limited, and are each preferably 0.5 to 5 mm, more preferably 0.7 to 3 mm.

As described above, the first resin layer comprising a light diffusion particle may be formed on the entire surface of the interlayer film for laminated glass, or may be formed on a partial region thereof. For example, in a case where the interlayer film comprises the first to third resin layers as in Figs. 23 and 24, the first resin layer may be provided on a partial region of the interlayer film for laminated glass and no first resin layer may be provided on other regions. In other words, a portion having two layers of the second and third resin layers 155 and 156 and a portion having three layers of the first to third resin layers 154 to 156 may be provided in the interlayer film in the configuration illustrated in Fig. 23. A portion having three layers of the second to fourth resin layers 155 to 157 and a portion having four layers of the first to fourth resin layers 154 to 157 may be provided in the interlayer film in the configuration illustrated in Fig. 24.

The interlayer film may have one of a region where the thickness of the first resin layer is constant, and a region where the thickness is gradually changed (for example, a region where the thickness is gradually decreased from the region where the thickness is constant), may have only one thereof, or may have both the region where the thickness is constant and the region where the thickness is gradually changed. The interlayer film preferably has at least the region where the thickness is constant in order to stabilize the contrast of an image.

The above image display system can send various messages and display various images toward the vehicle exterior and/or the vehicle interior, by a simple configuration. The image display system can be combined with a touch sensor and thus enhanced in usability.

Examples

Examples

The present invention is described in more detail with reference to Examples, but the present invention is not limited to such Examples at all.
Various physical properties were here measured and evaluated as follows.

[Total light transmittance (TvD)]

The total light transmittance (TvD) was measured according to JIS R3106 (2019). Specifically, the laminated glass was in parallel with and in close contact with the opening of an integrating sphere so that all penetrating light rays were received by the integrating sphere, and the spectral transmittance was measured with a spectrophotometer ("U-4100" manufactured by Hitachi High-Tech Science Corporation). The total light transmittance was calculated from the spectral transmittance obtained.

[Projection ability]

One surface of each laminated glass obtained in Examples and Comparative Examples was irradiated with light by a DLP projector (trade name "EB-1780W" manufactured by Seiko Epson Corp.), and an image was produced on each laminated glass. The image produced was observed from other surface side of each laminated glass, and evaluated according to the following evaluation criteria.

0: no image recognizable.
1: something produced roughly recognizable.
2: image produced certainly recognizable, but slightly blurred.
3: image very clearly displayed in case of dark periphery.
4: image very clearly displayed.

Each component used in Examples and Comparative Examples is as follows.

(Polyvinyl acetal resin)

PVB 1: polyvinyl butyral resin obtained by acetalization of polyvinyl alcohol having an average degree of polymerization of 1700 by n-butyraldehyde. The amount of hydroxyl group, the degree of acetylation and the degree of butyralization are as described in Table 1.
PVB 2: polyvinyl butyral resin obtained by acetalization of polyvinyl alcohol having an average degree of polymerization of 2300 by n-butyraldehyde. The amount of hydroxyl group, the degree of acetylation and the degree of butyralization are as described in Table 1.

(Plasticizer)

3GO: triethylene glycol-di-2-ethylhexanoate
(Light diffusion particle)
Calcium carbonate (1) ("Super #1500" manufactured by Maruo Calcium Co., Ltd., median size 4 μm)
Calcium carbonate (2) ("Super #2000" manufactured by Maruo Calcium Co., Ltd., median size 2 μm)
Silica ("Nipsil E170" manufactured by Tosoh Silica Corporation, average particle size 3 μm)
Titanium oxide ("CR-50" manufactured by Ishihara Sangyo Kaisha, Ltd., average particle size 0.25 μm)

[Example 1]

(Production of interlayer film)

A resin composition for a first resin layer was obtained by kneading 100 parts by mass of PVB 1 as a polyvinyl acetal resin, 40 parts by mass of 3GO as a plasticizer and calcium carbonate as a light diffusion particle in a co-extruder. The calcium carbonate was here added so that the content based on the total amount of the first resin layer was 10.7% by mass. Each resin composition for second and third resin layers was also obtained by kneading 100 parts by mass of PVB 1 as a polyvinyl acetal resin and 40 parts by mass of 3GO as a plasticizer in a co-extruder.

The obtained resin compositions for first to third layers were co-extruded by the co-extruder, to thereby obtain an interlayer film having three layers structure composed of second resin layer having a thickness of 325 μ m, first resin layer having a thickness of 150 μ m and third resin layer having a thickness of 325 μ m.

(Production of laminated glass)

Two sheets of clear glass (10 cm length × 10 cm width × 2.5 mm thickness, visible light transmittance 90.4%, manufactured by Central Glass Co., Ltd.) according to JIS R3202 (2011) were prepared, and the interlayer film produced was sandwiched between the two sheets of clear glass, to thereby obtain a laminate. The laminate was placed in a rubber bag, subjected to degassing at a degree of vacuum of 2.6 kPa for 20 minutes, thereafter transferred into an oven with being subjected to degassing, furthermore retained at 90°C for 30 minutes and pressed in vacuum, and temporarily compression bonded. The laminate temporarily compression bonded was compression bonded in an autoclave in conditions of 135°C and a pressure of 1.2 MPa for 20 minutes, to thereby obtain laminated glass composed of glass plate/second resin layer/first resin layer/third resin layer/glass plate.

[Examples 2 to 12 and Comparative Example 2]

The procedures the same as in Example 1 were performed except that the type of each polyvinyl acetal resin for use in each resin composition, the amount of compounding of each plasticizer, the amount of compounding of each light diffusion particle and the thickness of each resin layer were changed as described in Table 1.

[Comparative Example 1]

A resin composition for a first resin layer was obtained by kneading 100 parts by mass of PVB 1 as a polyvinyl acetal resin, 40 parts by mass of 3GO as a plasticizer and calcium carbonate (1) as a light diffusion particle in an extruder. The calcium carbonate was here added so that the content based on the total amount of the first resin layer was 3.0% by mass. The obtained resin composition for a first resin layer was extruded by the extruder, to obtain an interlayer film including a single layer of a first resin layer having a thickness of 800 μm. Thereafter, laminated glass was produced by the same method as in Example 1, and laminated glass composed of glass plate/first resin layer/glass plate was obtained.

[Table 1]

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|---|
| First resin layer | Polyvinyl acetal resin | Type | PVB 1 | PVB 2 | PVB 2 | PVB 2 | PVB 1 | PVB 1 | PVB 1 | PVB 1 | PVB 1 | PVB 1 | PVB 1 | PVB 1 | PVB 1 | PVB 1 |
| | | Average degree of polymerization of PVA | 1700 | 2300 | 2300 | 2300 | 1700 | 1700 | 1700 | 1700 | 1700 | 1700 | 1700 | 1700 | 1700 | 1700 |
| | | Amount of hydroxyl group [mol%] | 30 | 23 | 23 | 23 | 30 | 30 | 30 | 30 | 30 | 30 | 30 | 30 | 30 | 30 |
| | | Degree of acetylation [mol%] | 1 | 12.5 | 12.5 | 12.5 | 1 | 1 | 1 | 1 | 1 | 1 | 1 | 1 | 1 | 1 |
| | | Degree of butyralization [mol%] | 69 | 64.5 | 64.5 | 64.5 | 69 | 69 | 69 | 69 | 69 | 69 | 69 | 69 | 69 | 69 |
| | Plasticizer | Type | 3GO | 3GO | 3GO | 3GO | 3GO | 3GO | 3GO | 3GO | 3GO | 3GO | 3GO | 3GO | 3GO | 3GO |
| | | Content [phr] | 40 | 80 | 60 | 60 | 40 | 40 | 40 | 40 | 40 | 40 | 40 | 40 | 40 | 40 |
| | Light diffusion particle | Type | Calcium carbonate (1) | Calcium carbonate (1) | Calcium carbonate (1) | Calcium carbonate (1) | Calcium carbonate (1) | Calcium carbonate (1) | Calcium carbonate (1) | Silica | Titanium oxide | Calcium carbonate (2) | Calcium carbonate (1) | Calcium carbonate (1) | Calcium carbonate (1) | Calcium carbonate (1) |
| | | Content (C) [wt%] | 10.7 | 16.0 | 17.8 | 20.0 | 16.0 | 32.0 | 16.0 | 70.0 | 30.0 | 10.7 | 20.0 | 30.0 | 3.0 | 0.5 |
| | Thickness (T) [μm] | | 150 | 100 | 90 | 80 | 100 | 50 | 100 | 50 | 100 | 150 | 45 | 100 | 800 | 150 |
| | C × T | | 1600 | 1600 | 1600 | 1600 | 1600 | 1600 | 1600 | 3500 | 3000 | 1600 | 900 | 3000 | 2400 | 75 |

(continued)

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|---|
| Second and third resin layers | Polyvinyl acetal resin | Type | PVB 1 | PVB 1 | PVB 1 | PVB 1 | PVB 1 | PVB 1 | PVB 1 | PVB 1 | PVB 1 | PVB 1 | PVB 1 | PVB 1 | - | PVB 1 |
| | | Average degree of polymerization of PVA | 1700 | 1700 | 1700 | 1700 | 1700 | 1700 | 1700 | 1700 | 1700 | 1700 | 1700 | 1700 | | 1700 |
| | | Amount of hydroxyl group [mol%] | 30 | 30 | 30 | 30 | 30 | 30 | 30 | 30 | 30 | 30 | 30 | 30 | | 30 |
| | | Degree of acetylation [mol%] | 1 | 1 | 1 | 1 | 1 | 1 | 1 | 1 | 1 | 1 | 1 | 1 | | 1 |
| | | Degree of butyralization [mol%] | 69 | 69 | 69 | 69 | 69 | 69 | 69 | 69 | 69 | 69 | 69 | 69 | | 69 |
| | Plasticizer | Type | 3GO | 3GO | 3GO | 3GO | 3GO | 3GO | 3GO | 3GO | 3GO | 3GO | 3GO | 3GO | | 3GO |
| | | Content [phr] | 40 | 36 | 40 | 40 | 40 | 40 | 40 | 40 | 40 | 40 | 40 | 40 | | 40 |
| | Thickness [μm] | | 325 | 350 | 355 | 360 | 350 | 375 | 150 | 350 | 350 | 325 | 327.5 | 325 | | 325 |
| Entire interlayer film | Content [% by weight] of light diffusion particle [wt%] | | 2.0 | 2.0 | 2.0 | 2.0 | 2.0 | 2.0 | 4.0 | 4.4 | 3.8 | 2.0 | 1.3 | 3.8 | 3.0 | 0.1 |
| Physical properties | Total light transmittance (TvD) [%] | | 63 | 65 | 62 | 66 | 63 | 67 | 40 | 69 | 52 | 64 | 69 | 44 | 52 | 85 |
| Evaluation | Projection ability | | 3 | 4 | 4 | 4 | 4 | 3 | 3 | 2 | 2 | 2 | 2 | 3 | 1 | 0 |

* Content of plasticizer: content (parts by mass) based on 100 parts by mass of polyvinyl acetal resin in each resin layer.
* Content of light diffusion particle: concentration (% by mass) of each light diffusion particle in first resin layer and entire interlayer film.

As described above, an interlayer film for laminated glass having a multiple-layered and specified configuration could be used to result in an improvement in projection ability and could allow for display of an image at a high contrast when used as an image display screen, in each of Examples. On the contrary, an interlayer film for laminated glass having a single layer or exhibiting an increased total light transmittance could not allow for display of an image at a high contrast when used a an image display screen, in each of Comparative Examples.

Reference Signs List

10, 15 interlayer film for laminated glass
11 first resin layer
12 second resin layer
13 third resin layer
20, 25, 31 laminated glass
21, 22 glass member
30 image display system
32 light source apparatus
OB observer

## Claims

1. An interlayer film for laminated glass, comprising two or more resin layers which comprise a first resin layer comprising a resin and a light diffusion particle and having a thickness of 150 μm or less, and
a total light transmittance according to JIS R3106 (2019), of laminated glass in which the interlayer film is sandwiched between two sheets of clear glass according to JIS R3202 (2011), being less than 70%.

2. An interlayer film for laminated glass for use in an image display screen, comprising two or more resin layers which comprise a first resin layer comprising a resin and a light diffusion particle, and
a total light transmittance according to JIS R3106 (2019), of laminated glass in which the interlayer film is sandwiched between two sheets of clear glass according to JIS R3202 (2011), being less than 70%.

3. The interlayer film for laminated glass according to claim 2, wherein the first resin layer has a thickness of 150 μm or less.

4. The interlayer film for laminated glass according to any one of claims 1 to 3, wherein a relationship according to the following expression (1):

$$500 \leq C \times T \leq 3600 \quad (1)$$

is satisfied, wherein a concentration of the light diffusion particle in the first resin layer is C (% by mass) and a thickness of the first resin layer is T (μm).

5. The interlayer film for laminated glass according to any one of claims 1 to 4, wherein a concentration of the light diffusion particle in the first resin layer is 5% by mass or more.

6. The interlayer film for laminated glass according to any one of claims 1 to 5, wherein the light diffusion particle comprises calcium carbonate.

7. The interlayer film for laminated glass according to any one of claims 1 to 6, comprising:

a resin layer other than the first resin layer, wherein
the resin layer other than the first resin layer is provided on one surface side, the one surface being a surface through which light from a light source apparatus is incident.

8. The interlayer film for laminated glass according to any one of claims 1 to 7, comprising:

second and third resin layers each comprising a resin, wherein
the first resin layer is placed between the second and third resin layers.

**9.** The interlayer film for laminated glass according to any one of claims 1 to 8, for use in a rear-projection image display screen.

**10.** A laminated glass, comprising paired glass members and an interlayer film for laminated glass placed between the paired glass members, and having a total light transmittance according to JIS R3106 (2019) of less than 70%,

the interlayer film for laminated glass comprising two or more resin layers, and
the resin layers comprising a first resin layer which comprises a resin and a light diffusion particle and has a thickness of 150 μm or less.

**11.** A laminated glass for use in an image display screen, comprising paired glass members and an interlayer film for laminated glass placed between the paired glass members, and having a total light transmittance according to JIS R3106 (2019) of less than 70%,

the interlayer film for laminated glass comprising two or more resin layers, and
the resin layers comprising a first resin layer which comprises a resin and a light diffusion particle.

**12.** An image display system comprising the laminated glass according to claim 10 or 11, and a light source apparatus for light irradiation on one surface of the laminated glass.

Fig. 1

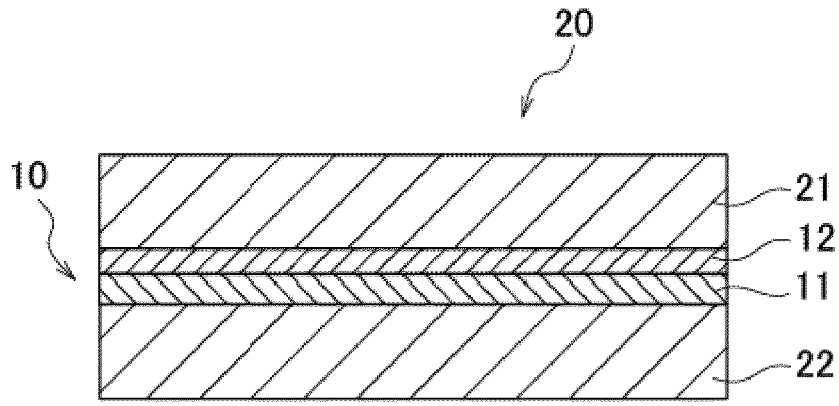


Fig. 2

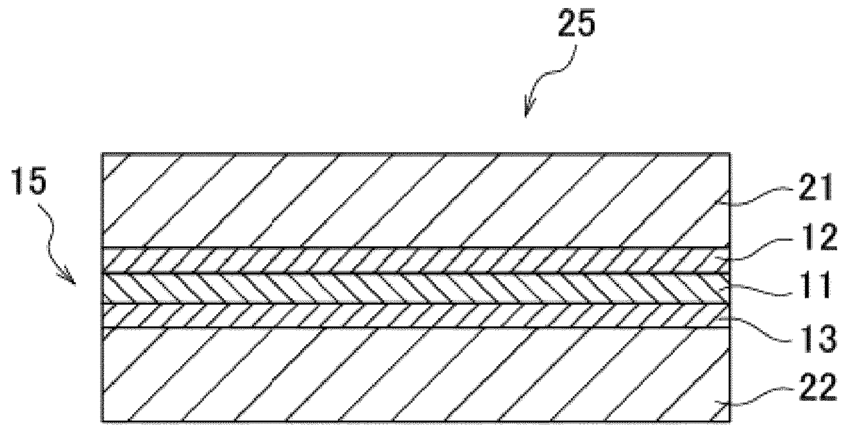

Fig. 3

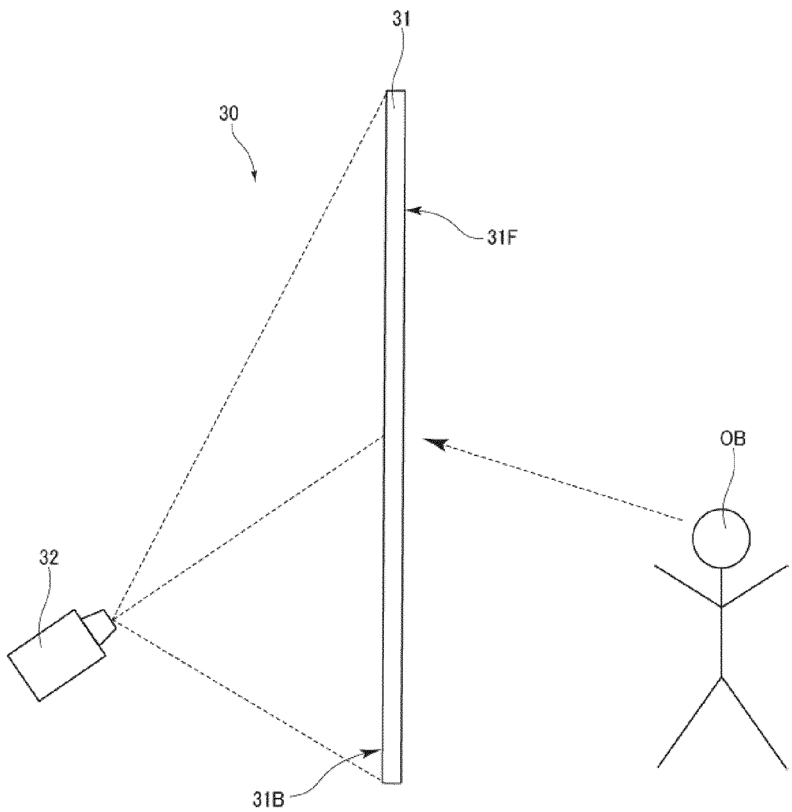


Fig. 4

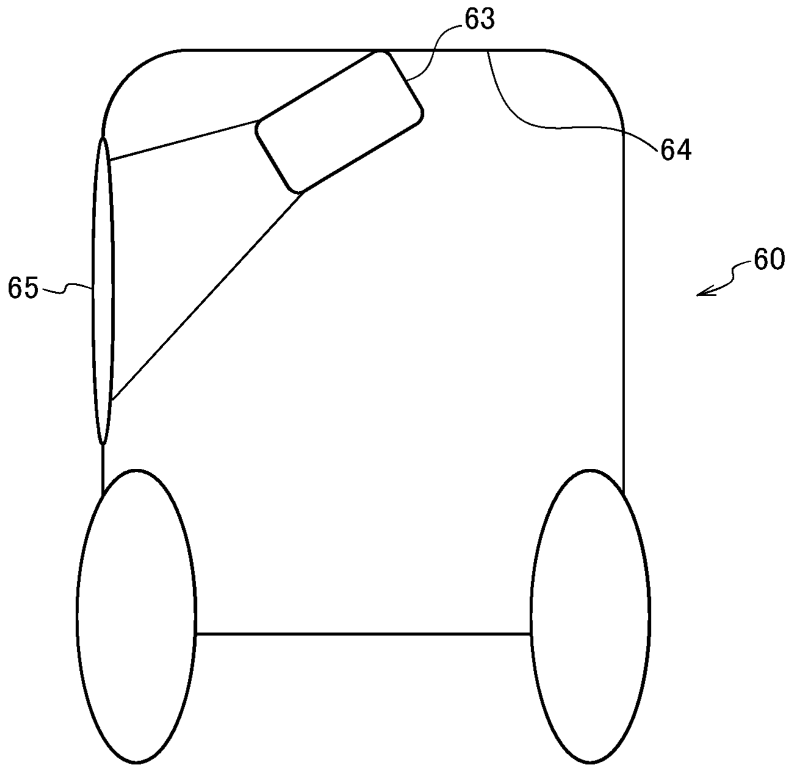

Fig. 5

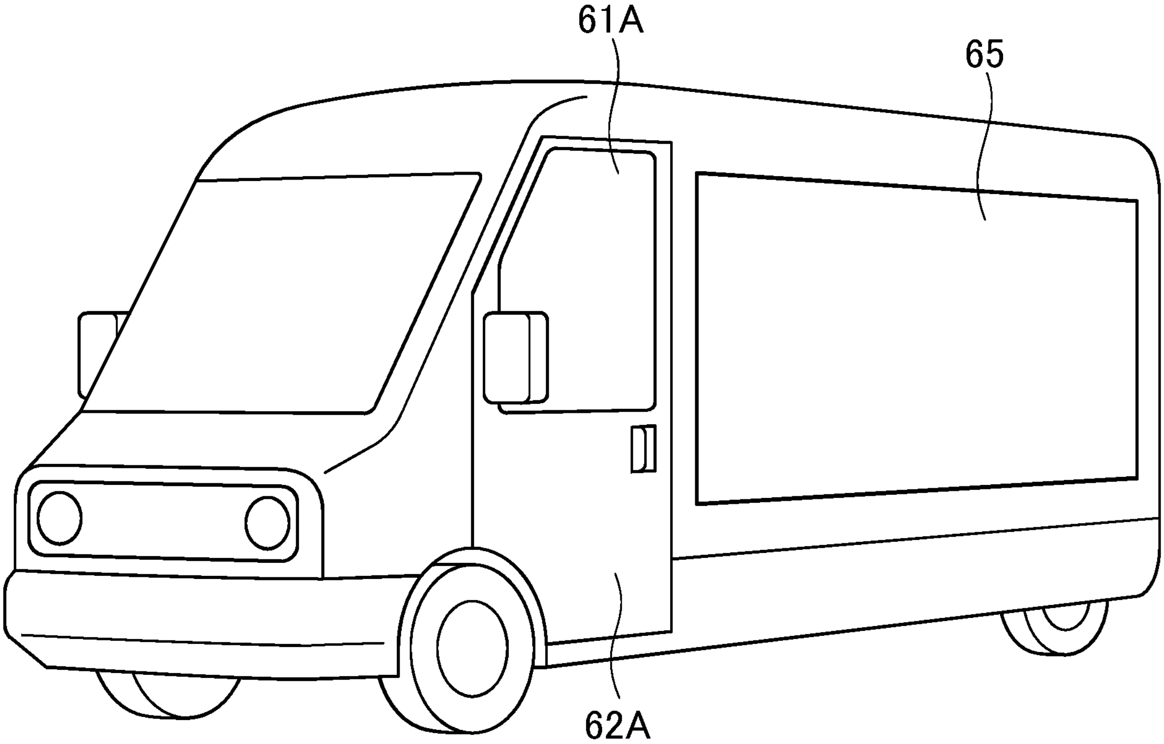


Fig. 6

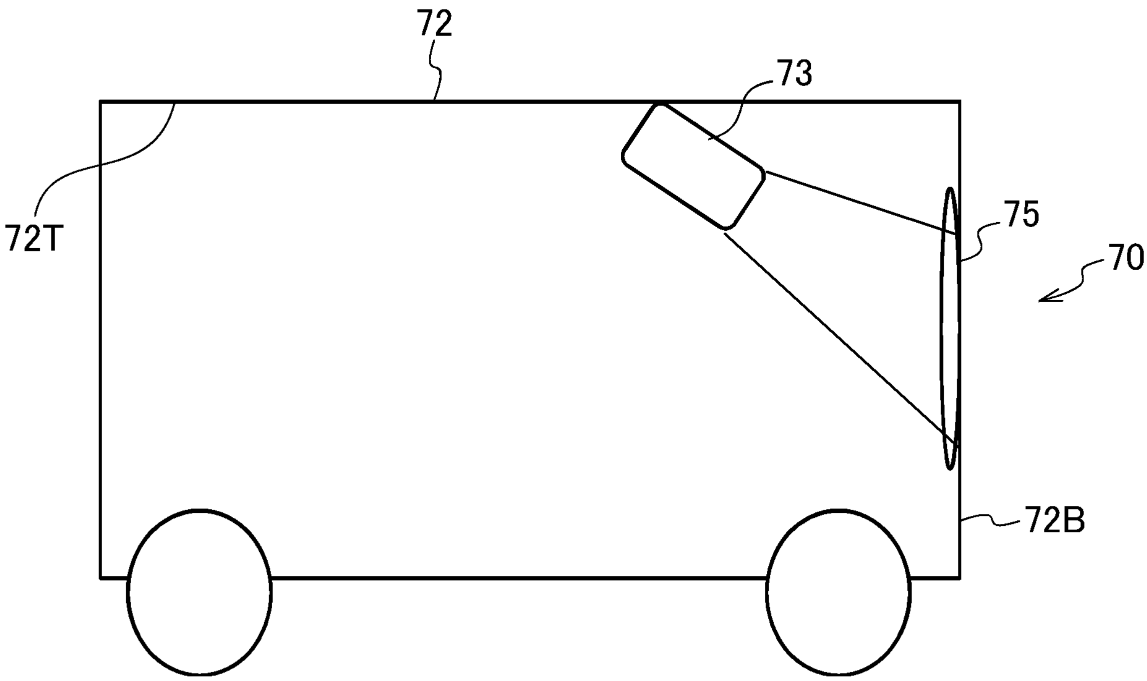

Fig. 7

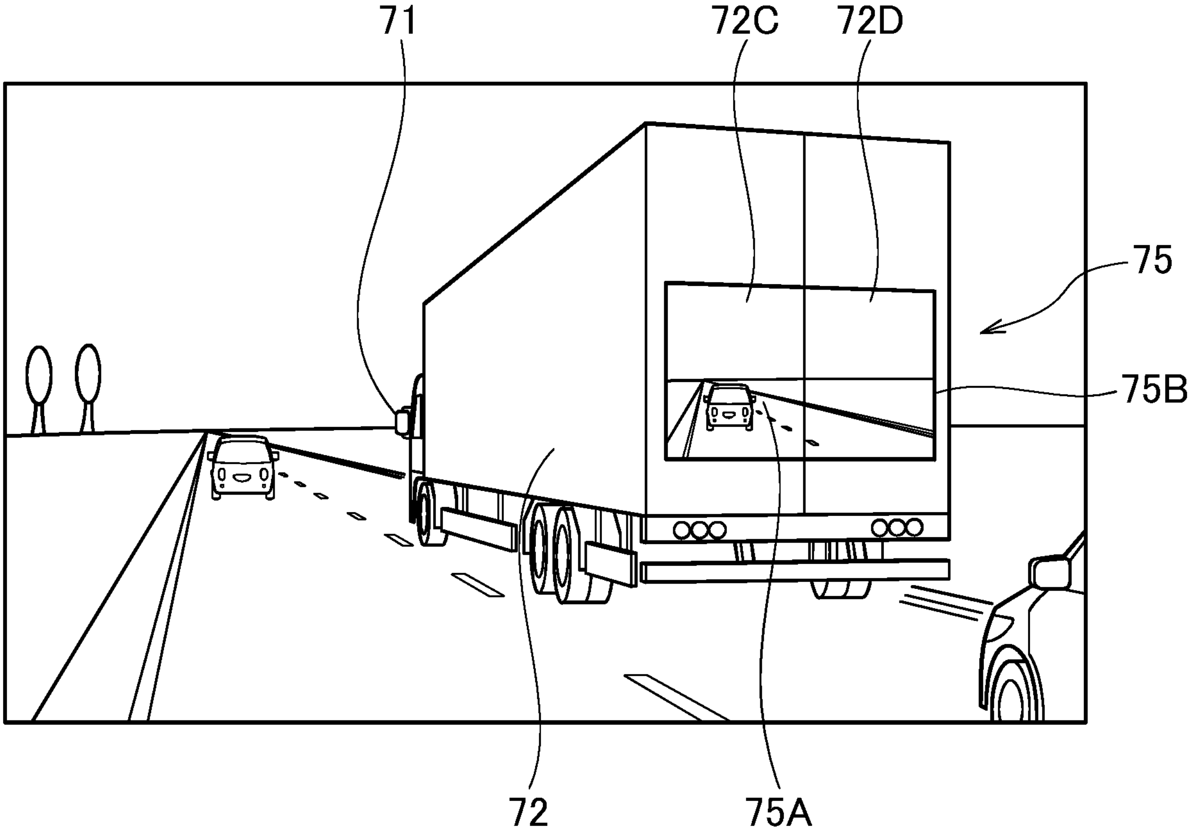

Fig. 8

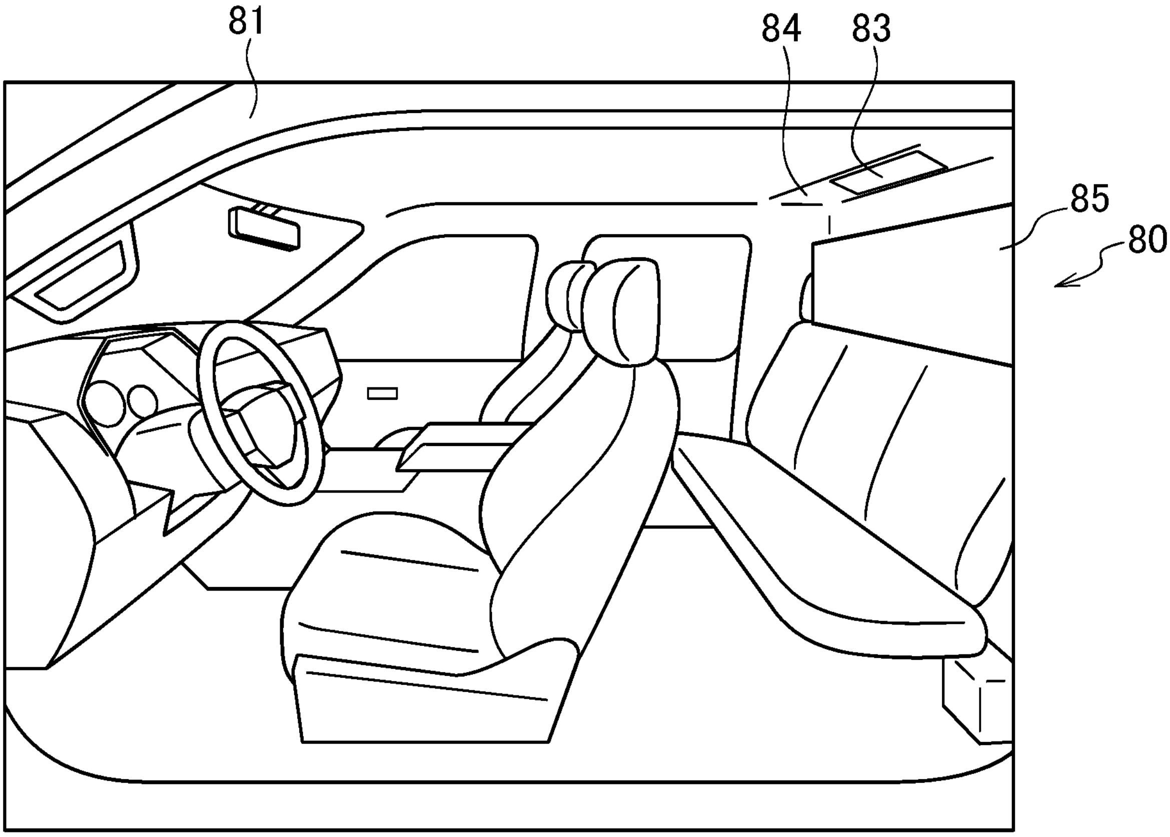


Fig. 9

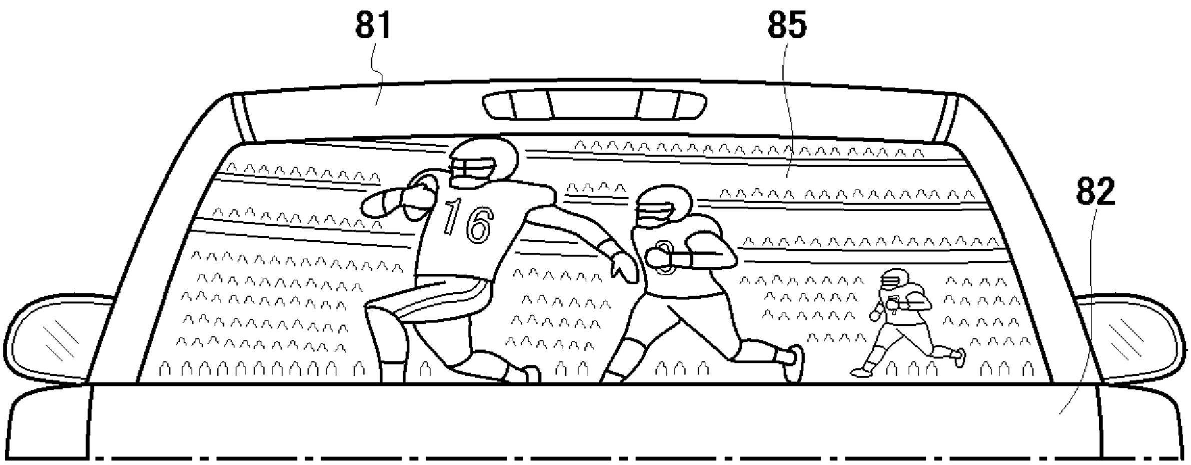

Fig. 10

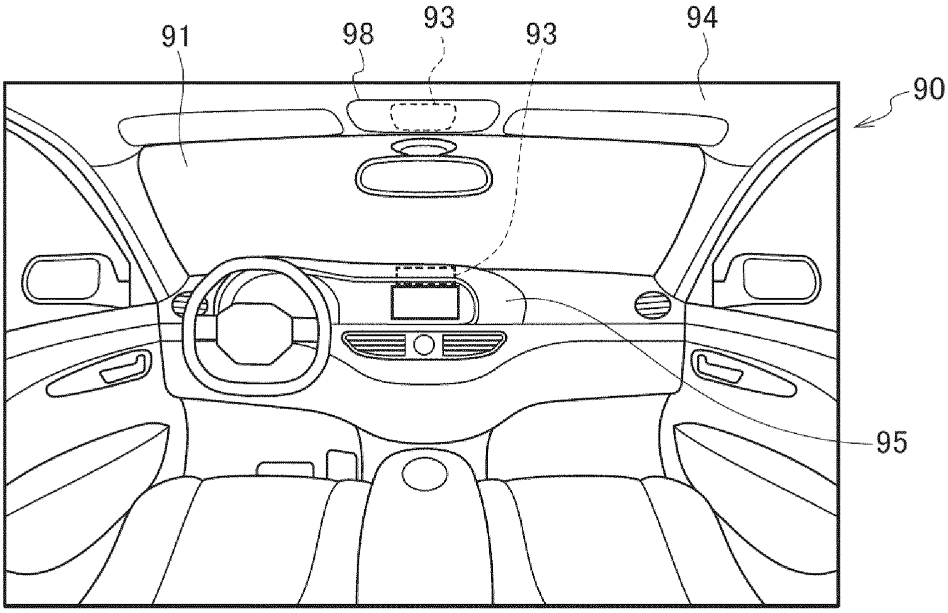
91
98
93
93
94
90
95

Fig. 11

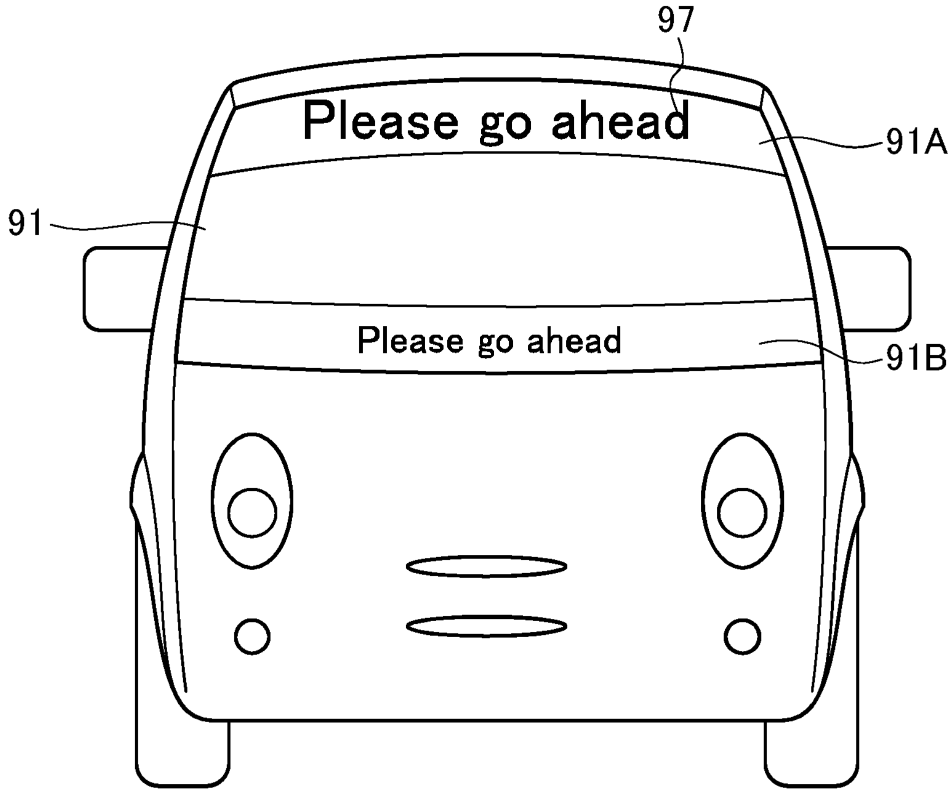
97
Please go ahead
91A
91
Please go ahead
91B

Fig. 12

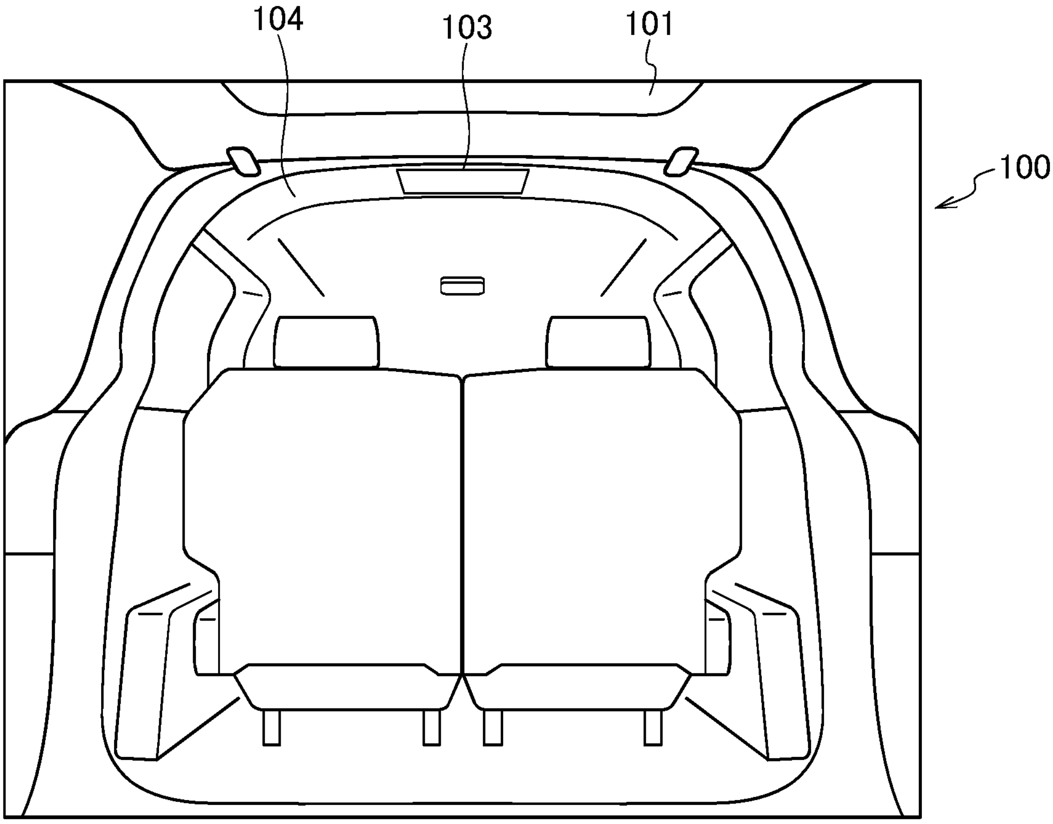


Fig. 13

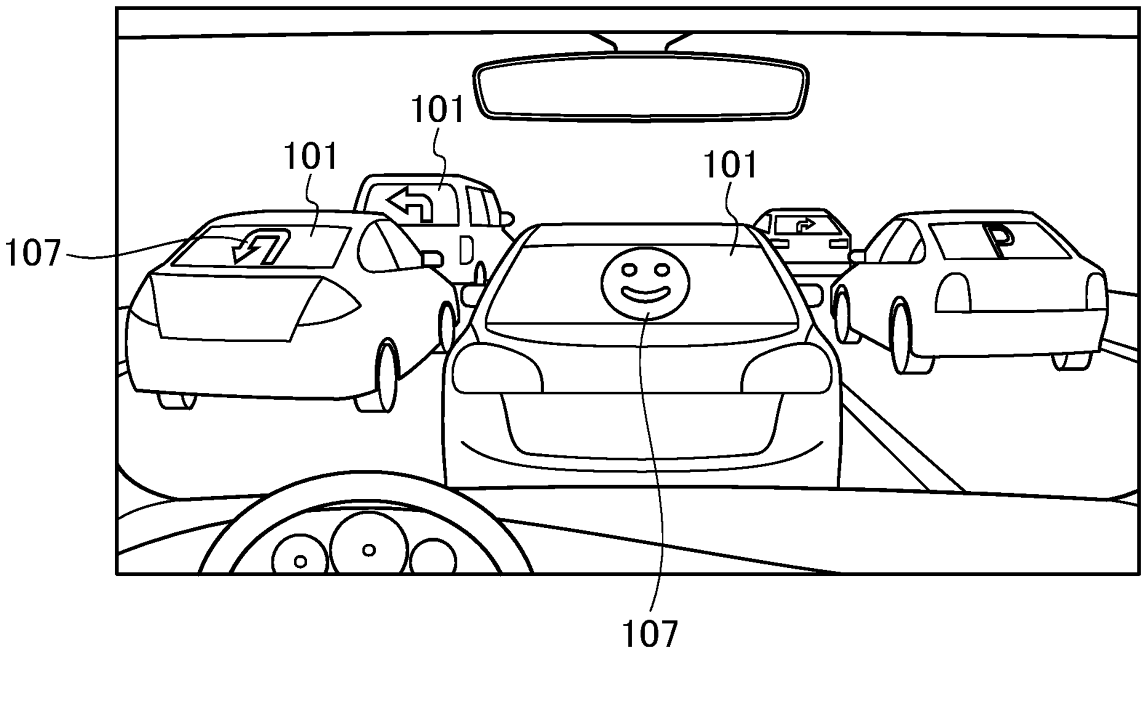

Fig. 14

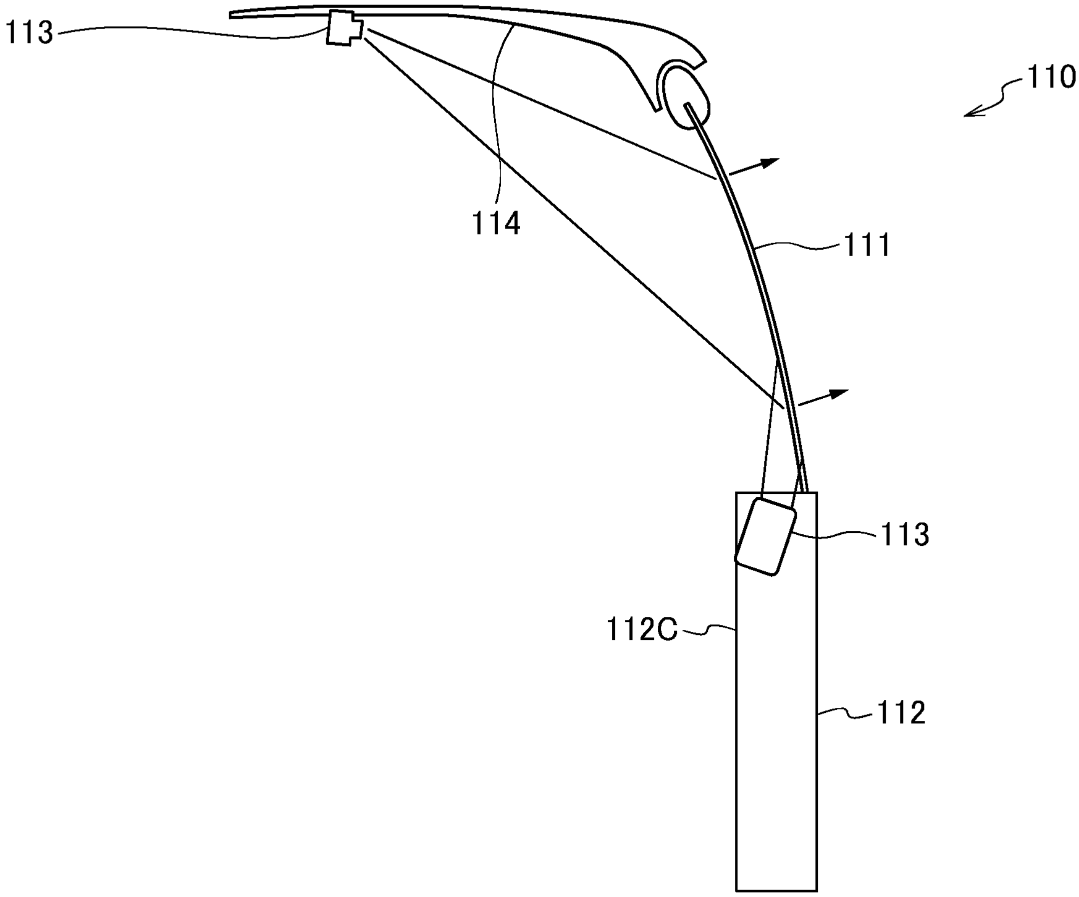
113
110
114
111
113
112C
112

Fig. 15

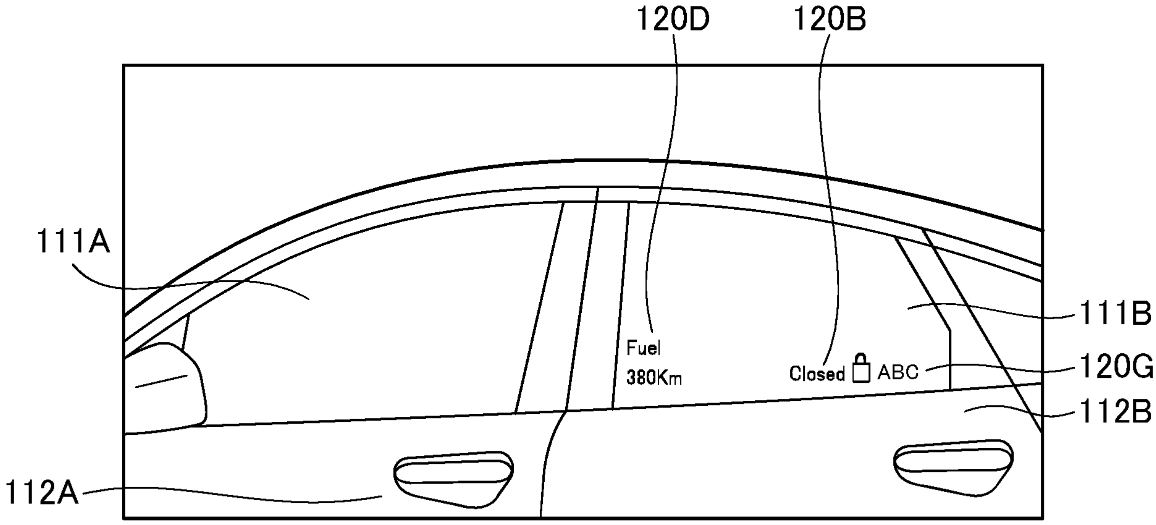
120D
120B
111A
Fuel
380Km
Closed
ABC
111B
120G
112B
112A

Fig. 16

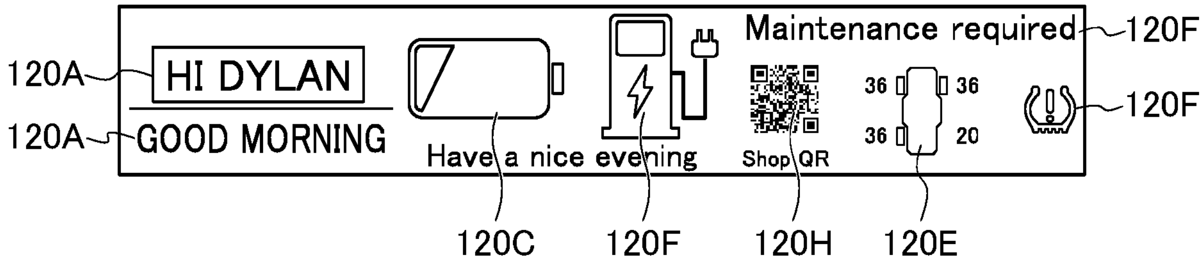
HI DYLAN
GOOD MORNING
Have a nice evening
Maintenance required
Shop QR
36
36
36
20
120A
120A
120C
120F
120H
120E
120F
120F

Fig. 17

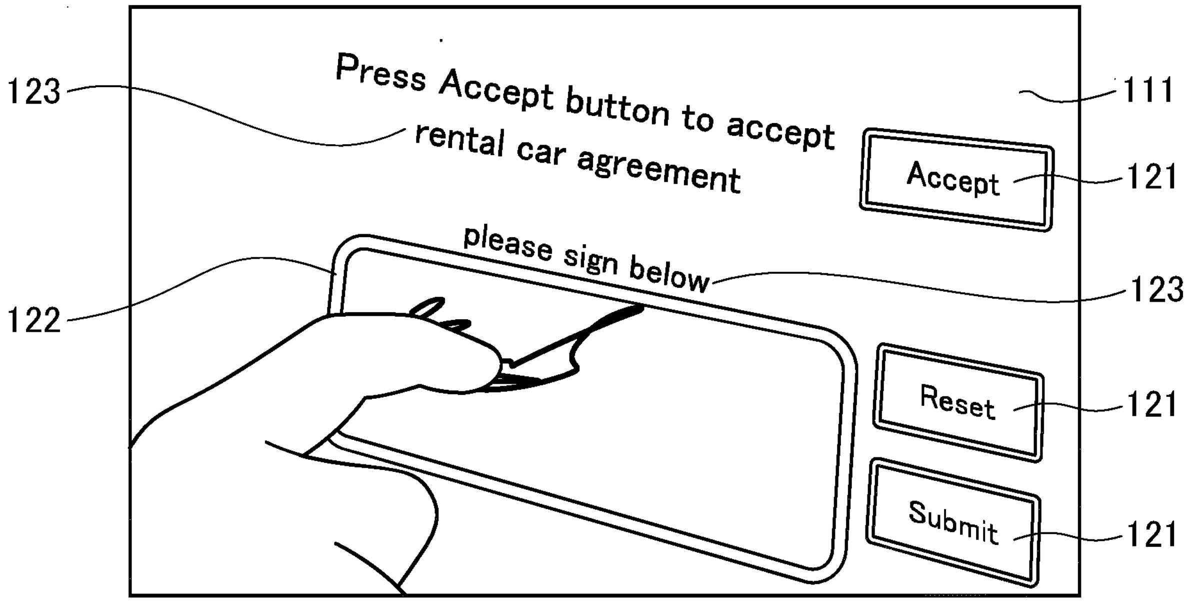
Press Accept button to accept rental car agreement
please sign below
Accept
Reset
Submit
123
111
121
123
122
121
121

Fig. 18

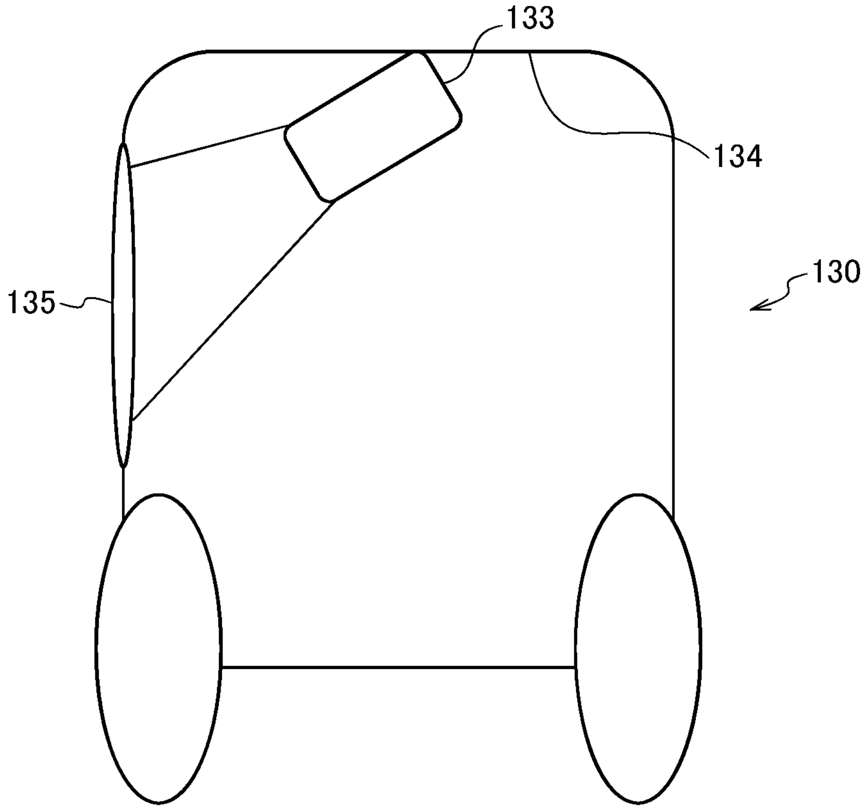

Fig. 19

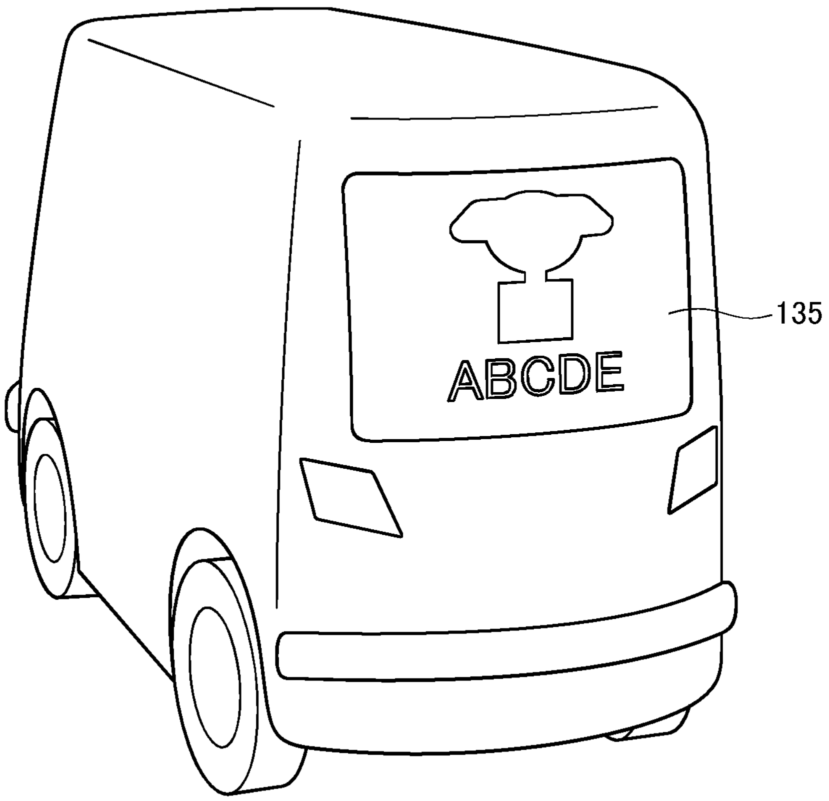


Fig. 20

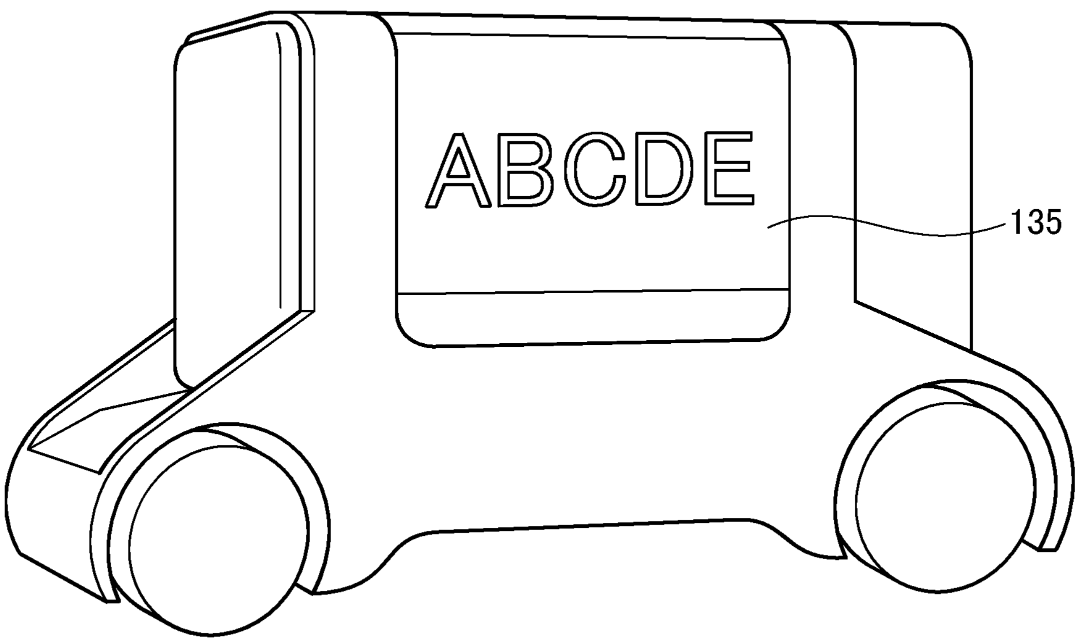

Fig. 21

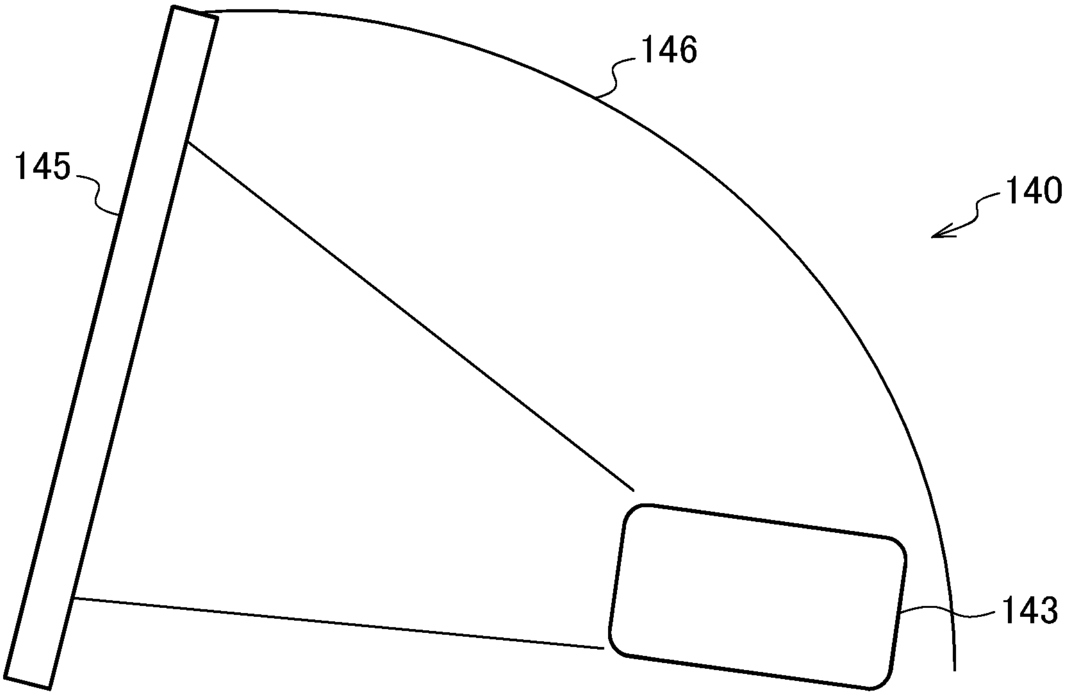


Fig. 22

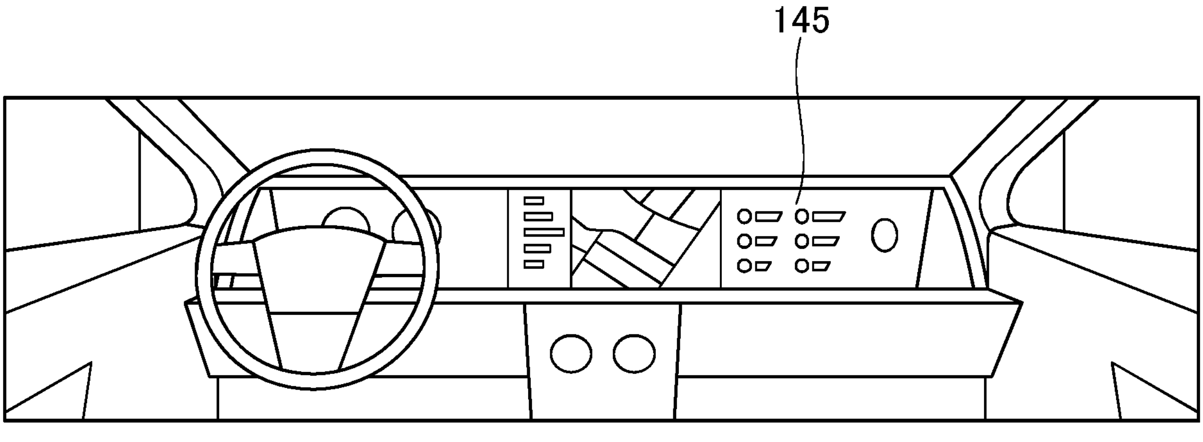

Fig. 23

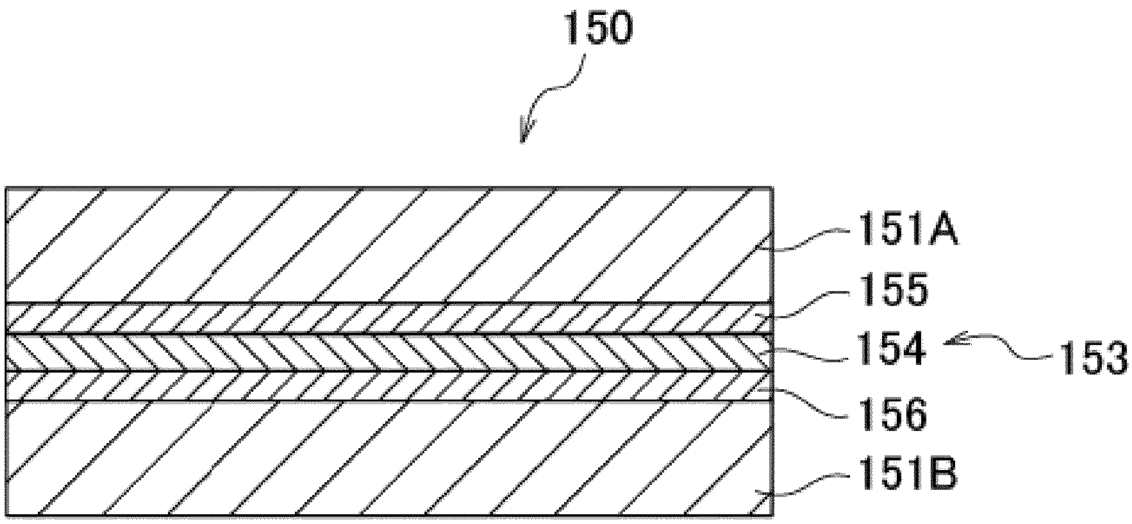


Fig. 24

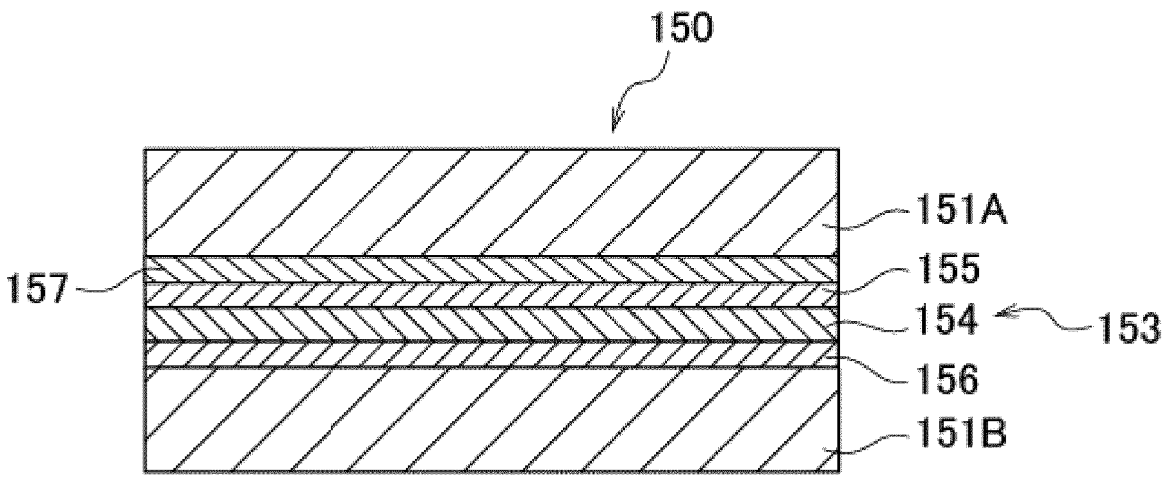

**INTERNATIONAL SEARCH REPORT**

International application No.
PCT/JP2020/044127

A. CLASSIFICATION OF SUBJECT MATTER
B32B 17/10(2006.01)i; B32B 27/18(2006.01)i; C03C 27/12(2006.01)i; G03B 21/14(2006.01)i; G03B 21/62(2014.01)i; G02B 5/02(2006.01)i; H04N 5/74(2006.01)i; B32B 7/023(2019.01)i
FI: C03C27/12 N; G03B21/62; G03B21/14 Z; G02B5/02 B; B32B27/18 Z; B32B7/023; B32B17/10; H04N5/74 C

According to International Patent Classification (IPC) or to both national classification and IPC

B. FIELDS SEARCHED

Minimum documentation searched (classification system followed by classification symbols)
C03C27/12; G03B21/14-53; G03B21/56-21/625; G02B5/02; B32B1/00-43/00; H04N5/74

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/111825 A1 (SEKISUI CHEMICAL CO., LTD.) 13 June 2019 (2019-06-13) paragraphs [0008], [0010]-[0012], [0015]-[0017], [0037], [0044], [0051]-[0055], fig. 4 | 1-12<br>6 |
| X<br>Y | JP 2019-200392 A (AGC INC.) 21 November 2019 (2019-11-21) paragraphs [0012]-[0030], [0035], [0057], fig. 1 | 1-12<br>6 |
| X<br>Y | WO 2016/068087 A1 (ASAHI GLASS CO., LTD.) 06 May 2016 (2016-05-06) paragraphs [0016], [0034], [0042]-[0043], [0081]-[0095], fig. 1 | 1-3, 7-12<br>4-6 |
| Y | WO 2016/143566 A1 (JXTG NIPPON OIL & ENERGY CORPORATION) 15 September 2016 (2016-09-15) paragraph [0035], example 5 | 4-6 |
| Y | JP 2010-24061 A (SEKISUI CHEMICAL CO., LTD.) 04 February 2010 (2010-02-04) paragraph [0015], examples 1-6 | 4-6 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 February 2021 (03.02.2021) | 16 February 2021 (16.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/044127

| Patent Documents referred in the Report | Publication Date | Patent Family | Publication Date |
|---|---|---|---|
| WO 2019/111825 A1 | 13 Jun. 2019 | TW 201925825 A | |
| JP 2019-200392 A | 21 Nov. 2019 | (Family: none) | |
| WO 2016/068087 A1 | 06 May 2016 | US 2017/0205701 A1 paragraphs [0045]-[0046], [0072], [0092]-[0096], [0170]-[0188], fig. 1<br>CN 107077058 A | |
| WO 2016/143566 A1 | 15 Sep. 2016 | US 2018/0045957 A1 paragraph [0043], example 5<br>EP 3251831 A1<br>CN 107517587 A | |
| JP 2010-24061 A | 04 Feb. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016082800 A
- WO 2016104055 A
- WO 2018012433 A
- WO 2016143566 A
- JP 2007057906 A
- WO 2019111825 A